# EUROPEAN PATENT SPECIFICATION

(11) **EP 4 071 566 B1**
(45) Date of publication and mention of the grant of the patent: **06.03.2024**
(21) Application number: 22166890.8
(22) Date of filing: 06.04.2022
(51) Int. Cl.: G05B 19/042, G06F 8/656

(54) **PROGRAM MODIFICATION SUPPORT DEVICE AND PROGRAM MODIFICATION SUPPORT METHOD**
PROGRAMMMODIFIZIERUNGSUNTERSTÜTZUNGSVORRICHTUNG UND PROGRAMMMODIFIZIERUNGSUNTERSTÜTZUNGSVERFAHREN
DISPOSITIF ET PROGRAMME DE PRISE EN CHARGE DE MODIFICATION DE PROGRAMME

(30) Priority: 09.04.2021 JP 2021066631
(43) Date of publication of application: 12.10.2022
(73) Proprietor: Yokogawa Electric Corporation, Musashino-shi Tokyo 180-8750 (JP)
(72) Inventor: OOTAKI, Erika, Musashino-shi, Tokyo, 180-8750 (JP); OHNO, Takeshi, Musashino-shi, Tokyo, 180-8750 (JP)
(74) Representative: Hoffmann Eitle

(56) References cited:
- US-A1- 2008 189 526
- US-A1- 2018 150 292
- US-A1- 2020 097 282
- US-A1- 2020 142 375

## Description

### BACKGROUND

### Field of the Invention

The present invention relates to a program modification support device and a program modification support method.

Priority is claimed on Japanese Patent Application No. 2021-066631, filed on April 9, 2021.

### Description of Related Art

Conventionally, process control systems controlling various state quantities (for example, a pressure, a temperature, a flow rate, and the like) in an industrial process have been constructed in plants, factories, and the like (hereinafter, when these are collectively referred to, they will be simply referred to as "plants"), and automatic operation thereof to a high degree has been realized. In such a process control system, replacement of hardware and improvement of software may be necessary. Examples of improvement of software include function expansion of an operating system (OS), corrections of faults/vulnerabilities of the operating system, and the like.

In Japanese Unexamined Patent Application Publication No. 2020-52668, in a process control system including duplex process control devices (a currently-used device and a device for update), an invention capable of updating an update target program in a simple manner and in a short time while continuously operating the process control system has been disclosed. More specifically, a non-update target program other than an update target is temporarily stopped in the currently-used device, and only a context of the non-update target program is transmitted from the currently-used device to the device for update. Then, the device for update restores the context of the non-update target program using the transmitted context and initializes a context of the update target program, and the non-update target program and the update target program are resumed by the device for update.

Meanwhile, in order to update a program used by a process control system using the invention disclosed in Japanese Unexamined Patent Application Publication No. 2020-52668, a worker needs to make a modification of the program in correspondence with an online update. An "online update" represents an update of a program while the procedure of a function realized by a program is caused to continue. However, in order to make a modification of a program in correspondence with an online update, there is a problem in that a lot of effort of a worker is required.

US 2018/150292 A1 relates to hot-swapping of a live application by a staged application by permitting the staged application to operate in the background until the hot-swap occurs.

### SUMMARY

The object of the invention is achieved by the subject-matter of the independent claims. Advantageous embodiments are defined in the dependent claims. Further examples are provided for facilitating the understanding of the invention.

In order to solve the problem described above, a program modification support device may be a program modification support device (40) that supports modifications of programs (SP) realizing functions of a process control system (1) including a first process control device (10) and a second process control device (20). The program modification support device may include a selector (45a) configured to select, from data used in a first program (SP1) among the programs, data required to be maintained for continuing a first function when switching from the first process control device to the second process control device is performed, the first program being for realizing the first function required to be continued when the switching is performed.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

In addition, in the program modification support device according to the present invention, the selector is configured to select, from the data used in the first program, data of which a storage area of the data is to be retained up to a time point at which the switching is performed and of which values have a possibility of being changed in accordance with execution of the first program.

In addition, in the program modification support device according to one aspect of the present invention, the selector is configured to determine whether or not there is a possibility of the values of the selected data being changed in accordance with execution of a second program for realizing a second function that is not required to be continued when the switching is performed.

In addition, in the program modification support device according to one aspect of the present invention, in a case in which the selector has determined that there is a possibility of the values being changed in accordance with the execution of the second program, the selector is configured to select data required to be maintained for continuing the first function when the switching is performed from the data used in the first program and the data used in the second program in which there is a possibility of the values being changed.

In addition, the program modification support device according to the present invention may further include a modifier (45b) configured to modify the programs such that the second process control device takes over the data selected by the selector from the first process control device.

In addition, in the program modification support device according to one aspect of the present invention, in a case in which the data selected by the selector is data stored in an address variable area of which an address has a possibility of being changed between before/after the switching, the modifier is configured to modify the programs such that the data selected by the selector is stored in an address fixed area of which an address does not change between before/after the switching and becomes data indicated using a pointer.

In addition, in the program modification support device according to one aspect of the present invention, the modifier is configured to perform a modification for changing a variable name of data stored in the address variable area, among variable names written in the first program, to a variable name of the pointer.

In addition, in the program modification support device according to one aspect of the present invention, the modifier is configured to modify the programs such that a macro converting a variable name of data stored in the address variable area, among variable names written in the first program, to a variable name of the pointer is included.

In addition, in the program modification support device according to one aspect of the present invention, the modifier is configured to modify the programs such that data that is stored in the address fixed area and has a possibility of causing performance degradation of the process control system when instructed using the pointer, among the data selected by the selector, is taken over through a take-over area secured in advance from the first process control device to the second process control device.

In addition, in the program modification support device according to one aspect of the present invention, the modifier is configured to perform a modification of deleting a macro relating to a variable name of data taken over from the first process control device to the second process control device through the take-over area, among macros included in the first program.

In addition, in the program modification support device according to one aspect of the present invention, in a case in which the data selected by the selector is not able to be moved to the address fixed area, the modifier is configured to modify the programs to perform a procedure of generating an address table in which an address of the data is registered at a time of start of the first program, taking over a table number of the address table generated before the switching, and using the table number as a table number of the address table generated after the switching.

A program modification support method according to one aspect of the present invention may be a program modification support method that supports modifications of programs realizing functions of a process control system (1) comprising a first process control device (10) and a second process control device (20). The program modification support method may include selecting (S14), by a selector (45a), from data used in a first program (SP1) among the programs, data required to be maintained for continuing a first function when switching from the first process control device to the second process control device is performed, the first program being for realizing the first function required to be continued when the switching is performed.

In addition, the program modification support method according to the present invention may further include selecting, by the selector, from the data used in the first program, data of which a storage area of the data is to be retained up to a time point at which the switching is performed and of which values have a possibility of being changed in accordance with execution of the first program.

In addition, the program modification support method according to one aspect of the present invention may further include determining, by the selector, whether or not there is a possibility of the values of the selected data being changed in accordance with execution of a second program for realizing a second function that is not required to be continued when the switching is performed.

In addition, the program modification support method according to one aspect of the present invention may further include, in a case in which the selector has determined that there is a possibility of the values being changed in accordance with the execution of the second program, selecting, by the selector, data required to be maintained for continuing the first function when the switching is performed from the data used in the first program and the data used in the second program in which there is a possibility of the values being changed.

In addition, the program modification support method according to the present invention may further include modifying, by a modifier, the programs such that the second process control device takes over the data selected by the selector from the first process control device.

In addition, the program modification support method according to one aspect of the present invention may further include, in a case in which the data selected by the selector is data stored in an address variable area of which an address has a possibility of being changed between before/after the switching, modifying, by the modifier, the programs such that the data selected by the selector is stored in an address fixed area of which an address does not change between before/after the switching and becomes data indicated using a pointer.

In addition, the program modification support method according to one aspect of the present invention may further include, performing, by the modifier, a modification for changing a variable name of data stored in the address variable area, among variable names written in the first program, to a variable name of the pointer.

In addition, the program modification support method according to one aspect of the present invention may further include, modifying, by the modifier, the programs such that a macro converting a variable name of data stored in the address variable area, among variable names written in the first program, to a variable name of the pointer is included.

In addition, the program modification support method according to one aspect of the present invention may further include modifying, by the modifier, the programs such that data that is stored in the address fixed area and has a possibility of causing performance degradation of the process control system when instructed using the pointer, among the data selected by the selector, is taken over through a take-over area secured in advance from the first process control device to the second process control device.

According to the present invention, there is an advantage of being able to support a worker to be able to easily modify a program in correspondence with an online update without requiring a lot of effort.

Further features and aspects of the present disclosure will become apparent from the following detailed description of exemplary embodiments with reference to the attached drawings.

### BRIEF DESCRIPTION OF THE DRAWINGS

FIG. 1 is a functional configuration diagram illustrating a schematic functional configuration of a process control system.
FIG. 2 is a block diagram illustrating a main part configuration of a program modification support device according to a first embodiment of the present invention.
FIG. 3 is a flowchart illustrating a program modification support method according to the first embodiment of the present invention.
FIG. 4 is a diagram illustrating an example of a system program used in the program modification support method according to the first embodiment of the present invention.
FIG. 5 is a block diagram illustrating a main part configuration of a program modification support device according to a second embodiment of the present invention.
FIG. 6 is a flowchart illustrating a program modification support method according to the second embodiment of the present invention.
FIG. 7 is a diagram illustrating an example of a system program used in the program modification support method according to the second embodiment of the present invention.
FIG. 8 is a diagram illustrating an example of a system program modified using the program modification support method according to the second embodiment of the present invention.
FIG. 9A is a diagram illustrating an example of memory maps acquired in a case in which system programs before modification are executed in the second embodiment of the present invention.
FIG. 9B is a diagram illustrating an example of memory maps acquired in a case in which system programs after modification are executed in the second embodiment of the present invention.
FIG. 10 is a flowchart illustrating a program modification support method according to a third embodiment of the present invention.
FIG. 11 is a diagram illustrating an example of a system program modified using the program modification support method according to the third embodiment of the present invention.
FIG. 12 is a flowchart illustrating a program modification support method according to a fourth embodiment of the present invention.
FIG. 13 is a diagram illustrating an example of a system program modified using the program modification support method according to the fourth embodiment of the present invention.
FIG. 14A is a diagram illustrating an example of memory maps acquired in a case in which system programs before modification are executed in the fourth embodiment of the present invention.
FIG. 14B is a diagram illustrating an example of memory maps acquired in a case in which system programs after modification are executed in the fourth embodiment of the present invention.
FIG. 15 is a flowchart illustrating a program modification support method according to a fifth embodiment of the present invention.
FIG. 16 is a diagram illustrating an example of a system program before modification used in the program modification support method according to the fifth embodiment of the present invention.
FIG. 17 is a diagram illustrating an example of a system program modified using the program modification support method according to the fifth embodiment of the present invention.

### DETAILED DESCRIPTION OF THE INVENTION

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

The present invention provides a program modification support device and a program modification support method supporting a worker such that a program is able to be modified easily in correspondence with an online update without requiring a lot of effort.

Hereinafter, program modification support devices and program modification support methods according to embodiments of the present invention will be described in detail with reference to the drawings. Hereinafter, first, an overview of the embodiments of the present invention will be described. Next, for easy understanding, a process control system will be described. Next, details of each embodiment will be described.

### [Overview]

The present invention supports a worker to be able to easily make a modification of a program in correspondence with to an online update without requiring a lot of effort. Since most process control systems are required to be continued to be operated over a long period such as months or years in order to improve the production efficiency as much as possible, a process control system that is in an operating state cannot be freely stopped. For example, other than stopping according to regular maintenance or shutdown performed for securing safety of a plant, basically, it is not permitted to stop a process control system. The reason for this is that, in the case of a chemical process as an example, when an unexpected interruption occurs in the middle of a process in which a chemical reaction continues, semi-processed products that have been produced midway may be useless, and great damage caused.

On the other hand, in a process control system, it is required that an erroneous operation and a deficit in the operation should not occur in view of safety, and thus in a case in which a cause of the occurrence of an erroneous operation and the like (for example, a fault of vulnerability of an operating system) is found, a countermeasure for resolving the cause (for example, an update of the operating system) needs to be performed instantaneously. However, as described above, since the process control system cannot be freely stopped, even when a cause of occurrence of an erroneous operation or the like is found, a countermeasure may not be able to be performed immediately.

Here, by using the invention disclosed in Japanese Unexamined Patent Application Publication No. 2020-52668, a program can be updated (updated online) while the procedure of a function realized using the program by the process control system is continued. However, in order to update a program in accordance with the invention disclosed in Japanese Unexamined Patent Application Publication No. 2020-52668, a worker needs to perform a measure represented in the following (a) to (d) for the program in advance and modify the program to be in correspondence with an online update.
(a) Completely understanding which programs are a target
(b) Determining a timing of switching at the time of updating a program
(c) Selecting data required to be maintained for procedure continuation of a function
(d) Implement a procedure of taking over selected data

However, it may be difficult for a worker to completely understand a target program. For example, there is a case in which a certain time has elapsed after development of a program, and no developer of the time of the development is present, and design information is not present as well, a case in which the scale of a program is large and complicated, or the like. In a case in which understanding of a target program is insufficient, it is difficult to modify the program in correspondence with an online update. In addition, it requires enormous labor and time for a worker to separately select data that is required to be maintained. In this way, conventionally, in order to modify a program in correspondence with an online update, a lot of effort of a worker is required.

According to an embodiment of the present invention, data required to be maintained for continuing a first function at the time of switching is selected from data used by a first program realizing the first function required to be continued when switching from a first process control device to a second process control device is performed. In accordance with this, a worker can easily perceive data required to be maintained for continuing the first function. In this way, the embodiment of the present invention can support a worker to easily modify a program in correspondence with an online update without requiring a lot of effort.

### [Process control system]

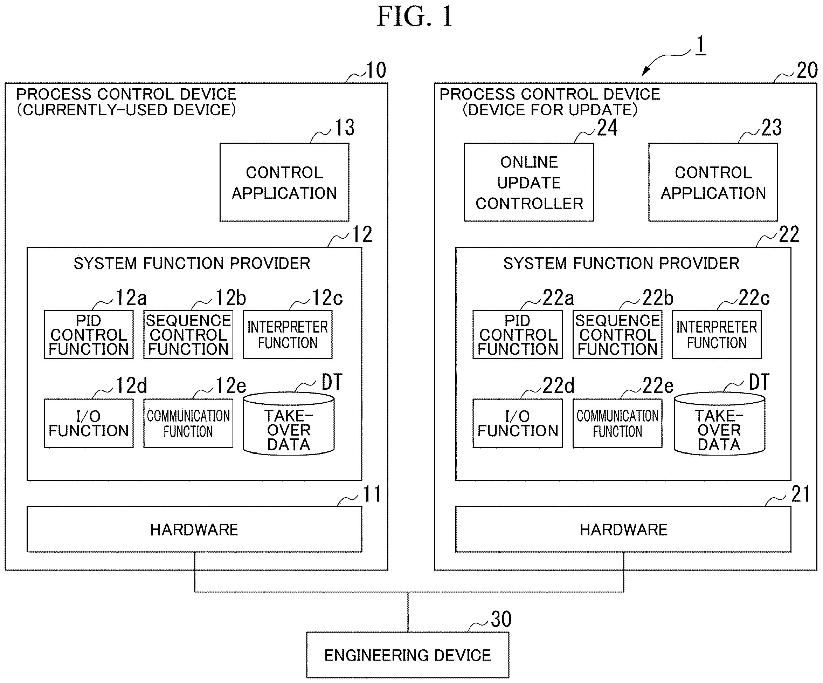

FIG. 1 is a functional configuration diagram illustrating a schematic functional configuration of a process control system. As illustrated in FIG. 1, the process control system 1 includes a process control device 10 (a first process control device), a process control device 20 (a second process control device), and an engineering device 30. The process control device 10 and the process control device 20 are realized using computers of scales that are the same or similar to each other. Hereinafter, the process control device 10 is referred to as a "currently-used device", and the process control device 20 is referred to as a "device for update". Here, the "currently-used device" represents a device on a currently operating side, and the "device for update" represents a device on a side that is not currently operating and stands by for an update of a program.

Here, a function operating in the process control device 10 is assumed to be switched to the process control device 20 for updating a program. In other words, initially, the process control device 10 that is a currently-used device is operating for controlling a process, and the process control device 20 that is a device for update is standing by. Thereafter, on the basis of a command signal from the engineering device 30, a function in the process control device 10 (the currently-used device) is temporarily stopped, and the function is resumed in the process control device 20 (the device for update). The process control device 20 has a function for updating a program with a state in which the system is operating maintained.

The process control device 10 has functions of hardware 11, a system function provider 12, and a control application 13. The hardware 11 includes a CPU (central control device), a memory, an input/output device, a communication device, and the like and executes various programs (a system program realizing a system function provided from the system function provider 12, an application program realizing the control application 13, and the like) used by the process control device 10. The function of the process control device 10 is realized by a program used for realizing the function being executed by the hardware 11. In other words, the function of the process control device 10 is realized by software and hardware resources in cooperation.

The system function provider 12 is positioned between the hardware 11 and the control application 13 and provides various system functions in accordance with a call from the control application 13 while managing the hardware 11. For example, the system function provider 12 provides system functions such as a PID control function 12a, a sequence control function 12b, an interpreter function 12c, an I/O function 12d, and a communication function 12e. An operating system (OS) and a driver are also included in the system function provider 12. In a system program realizing various system functions provided by the system function provider 12, an update target program that is an update target and a non-update target program that is not an update target are included.

The control application 13 performs process control with a control period (for example, a period of about several seconds) defined in advance. The control application 13 is composed of one of a plurality of control logics or control sequences generated by a user, for example, using the engineering device 30 and calls and executes the plurality of control logics or control sequences for every control period. Here, the control logics will be focused on and described. The procedure of a current control period ends in each control logic, the procedure returns to the calling source and is in a standby state until a next control period. Each control logic calls a system function provided by the system function provider 12 if necessary. Switching from the process control device 10 to the process control device 20 is performed such that the procedure of each control logic of the control application 13 and the procedure of a system function called from the control logic are continued. Generally, when the control application 13 ends the procedure of a control logic of the current control period and stands by until a next control period, switching to the process control device 20 is performed.

The process control device 20 has functions of hardware 21, a system function provider 22, a control application 23, and an online update controller 24. The hardware 21 is similar to the hardware 11 described above and executes various programs (a system program realizing a system function provided by the system function provider 22, an application program realizing the control application 23, and the like) used by the process control device 20. The function of the process control device 20 is also realized by software and hardware resources in cooperation.

The system function provider 22 provides system functions similar to those of the system function provider 12 described above. More specifically, the system function provider 22 provides system functions such as a PID control function 22a, a sequence control function 22b, an interpreter function 22c, an I/O function 22d, and a communication function 22e. The system functions provided from the system function provider 22 may be the same as the system functions provided from the system function provider 12, or different functions (for example, expanded functions) may be included therein.

The control application 23 is similar to the control application 13 described above and performs process control with a control period (for example, a period of about several seconds) defined in advance. The control application 23 performs process control while calling a system function provided by the system function provider 22.

The online update controller 24 controls an online update procedure of updating programs while causing the procedures of functions realized by the various programs to continue. More specifically, when switching from the process control device 10 to the process control device 20 is performed, the online update controller 24 acquires data (take-over data DT) required to be taken over for continuing the function from the process control device 10 and restores the acquired data in the process control device 20. Then, the online update controller 24 determines a timing at which switching from the process control device 10 to the process control device 20 is performed.

The engineering device 30 performs various kinds of engineering in the process control system 1 using design information of a plant including design information of the process control system 1. In addition, when switching from the process control device 10 to the process control device 20 is performed, the engineering device 30 gives an instruction for starting the operation of the process control device 20. For example, the engineering device 30 is realized by a computer such as a personal computer or a workstation.

### [First embodiment]

### <Program modification support device>

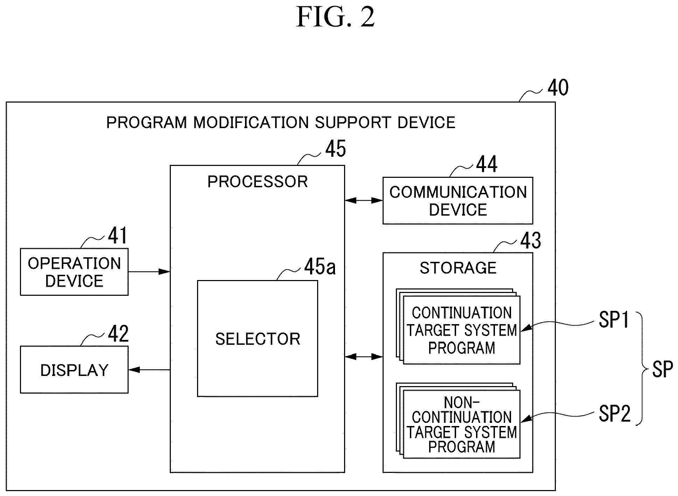

FIG. 2 is a block diagram illustrating a main part configuration of a program modification support device according to a first embodiment of the present invention. As illustrated in FIG. 2, the program modification support device 40 according to this embodiment includes an operation device 41, a display 42, a storage 43, a communication device 44, and a processor 45. Such a program modification support device 40, for example, supports a worker to modify a program such as a system program realizing a system function provided by the system function provider 12 of the process control device 10 (the currently-used device) illustrated in FIG. 1 in correspondence with an online system update.

The operation device 41, for example, includes an input device such as a keyboard or a pointing device and outputs an instruction corresponding to an operation of a worker using the program modification support device 40 (an instruction for the program modification support device 40) to the processor 45. The display 42, for example, includes a display device such as a liquid crystal display device and displays various kinds of information output from the processor 45. The operation device 41 and the display 42 may be members that are physically separate from each other or may be a member that is physically integrated like a liquid crystal display device of a touch panel type having both a display function and an operation function.

The storage 43, for example, includes an auxiliary storage device such as a hard disk drive (HDD) or a solid state drive (SSD) and stores various kinds of information. More specifically, the storage 43 stores a system program SP that realizes a system function provided by the system function provider 12 of the process control device 10 (the currently-used device) illustrated in FIG. 1. The storage 43 may store various programs realizing functions of the program modification support device 40, data that is temporarily used for performing the procedure of the processor 45, and the like.

Here, in the system program SP stored in the storage 43, a continuation target system program SP1 (a first system program) and a non-continuation target system program SP2 (a second system program) are included. The continuation target system program SP1 is a system program realizing a system function (a first system function) required to be continued when switching from the process control device 10 illustrated in FIG. 1 to the process control device 20 is performed. The non-continuation target system program SP2 is a system program realizing a system function (a second system function) not required to be continued when switching from the process control device 10 illustrated in FIG. 1 to the process control device 20 is performed.

For example, among the system functions provided by the system function provider 12 illustrated in FIG. 1, it is assumed that the PID control function 12a and the sequence control function 12b are required to be continued, and the interpreter function 22c, the I/O function 22d, and the communication function 22e are not required to be continued. In the case of this example, system programs realizing the PID control function 12a and the sequence control function 12b are set as the continuation target system programs SP1, and system programs realizing the interpreter function 22c, the I/O function 22d, and the communication function 22e are set as the non-continuation target system program SP2. For example, the system programs SP stored in the storage 43 are classified into continuation target system programs SP1 and non-continuation target system programs SP2 by a worker.

The system programs SP stored in the storage 43 are source codes of the system programs SP. Hereinafter, in a case in which a "system program SP", a "continuation target system program SP1", and a "non-continuation target system program SP2" are mentioned, they represent source codes unless otherwise mentioned. Hereinafter, in order to allow easy understanding, although the sources code described above will be described as being written in the C language, the source codes described above may be written in an arbitrary language other than the C language.

The communication device 44 communicates with external devices under the control of the processor 45. The communication device 44 may perform wired communication with external devices or may perform wireless communication with external devices. In addition, the communication device 44 may communicate with external devices through a network not illustrated in the drawing.

The processor 45 integrally controls operations of the program modification support device 40. For example, the processor 45 performs various procedures according to instructions output from the operation device 41 and causes the display 42 to display results of the procedures. In addition, the processor 45 writes various kinds of data into the storage 43 and reads various kinds of data from the storage 43. Furthermore, the processor 45 transmits/receives data to/from external devices by controlling the communication device 44.

The processor 45 includes a selector 45a. The selector 45a selects specific data from data used by the continuation target system programs SP1 among system programs SP. More specifically, when switching from the process control device 10 to the process control device 20 is performed, data required to be maintained for continuing the system function (the first system function) required to be continued is selected.

The selector 45a selects data satisfying all conditions (A) to (C) represented below from data used by the continuation target system programs SP1 as data required to be maintained for continuing the system function described above.
(A) Being data of a storage area retained up to a time point at which switching from the process control device 10 to the process control device 20 is performed
(B) There is a possibility of the value being changed from an initial value in accordance with execution of the continuation target system program SP1
(C) There is no possibility of the value being changed from an initial value in accordance with execution of the non-continuation target system program SP2

In a case in which data that satisfies the conditions (A) and (B) described above and does not satisfy the condition (C) described above is present, the selector 45a adds the non-continuation target system program SP2 to the continuation target system programs SP1 and performs selection for all the data of the continuation target system program SP1 again. In other words, the selector 45a selects data satisfying all the conditions (A) to (C) described above from data used by the continuation target system program SP1 and data used by the non-continuation target system program SP2 having a possibility of changing the value. Details of the procedure performed by the selector 45a will be described below.

The program modification support device 40, for example, is realized by a computer such as a personal computer of a workstation. A function of each block (for example, a function of the selector 45a provided in the processor 45) of the program modification support device 40 is realized as a software by installing a program realizing such a function in a computer. In other words, such a function is realized by software and hardware resources in cooperation.

A program realizing the function of each block of the program modification support device 40 may be distributed in a state in which the program is recorded on a recording medium or may be distributed through a network such as the Internet. The program modification support device 40 may be realized using cloud computing.

Although it is preferable that the function of the program modification support device 40 should be realized by software, the function is not prevented from being realized using dedicated hardware. The function of the program modification support device 40, for example, may be realized using hardware such as a field-programmable gate array (FPGA), a large scale integration (LSI), or an application specific integrated circuit (ASIC).

### <Program modification support method>

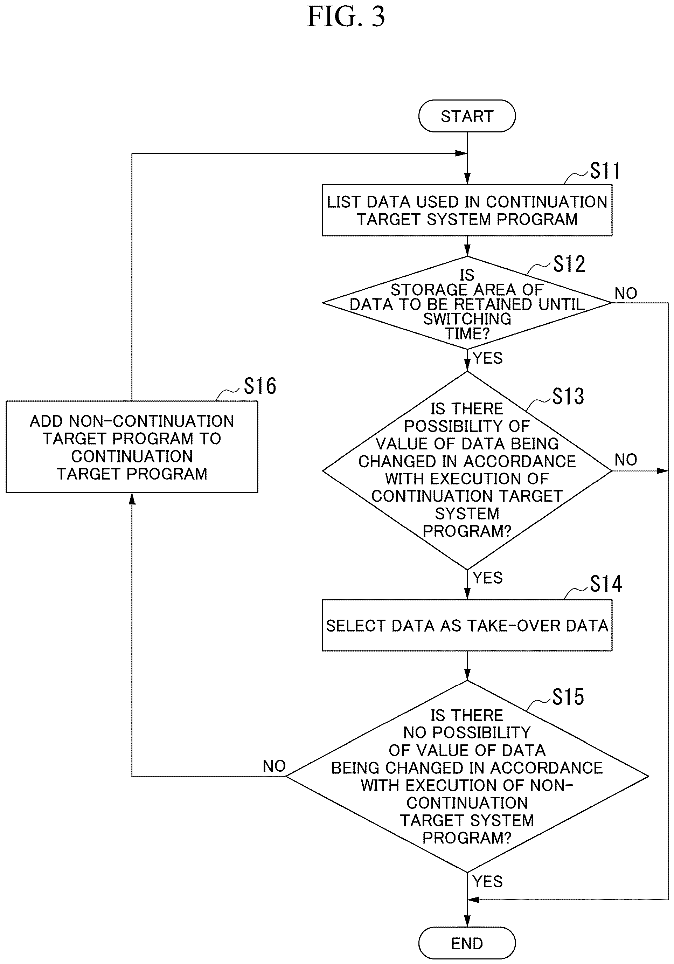

FIG. 3 is a flowchart illustrating a program modification support method according to the first embodiment of the present invention. A procedure of the flowchart illustrated in FIG. 3 starts by a worker giving a modification instruction for the continuation target system program SP1 by operating the operation device 41 of the program modification support device 40. A case in which system programs SP are not classified into continuation target system programs SP1 and non-continuation target system programs SP2 may be also considered. In such a case, when the modification instruction described above is given, a worker may specify a continuation target system program SP1 that is a modification target among system programs SP.

When the procedure starts, first, a procedure of listing data used by the continuation target system program SP1 is performed by the selector 45a (Step S11). For example, external variables including static variables, local variables, variables stored in an address fixed area, variables stored in an address variable area, and the like may be listed. Here, the address variable area is an area (a storage area) of which an address has a possibility of being changed between before/after switching from the process control device 10 to the process control device 20. The address fixed area is an area (a storage area) of which an address is not changed between before/after switching from the process control device 10 to the process control device 20.

Next, for each piece of the data listed in Step S11, a procedure of determining whether or not a storage area of the data is to be retained up to a time point at which switching from the process control device 10 to the process control device 20 is performed is performed by the selector 45a (Step S12). The reason for performing such a determination is that a storage area of data (take-over data DT: see FIG. 1) required to be taken over for continuing the system function temporarily becomes invalid immediately after switching from the process control device 10 to the process control device 20 and is rebuilt.

For example, a local variable of a stack area is released when the procedure returns to a calling source, and thus it is determined that the storage area of the data will not be retained in switching in the calling source (a determination result is "No"). In addition, in a case in which a variable stored in the address variable area has already been open when switching from the process control device 10 to the process control device 20 is performed, it is determined that the storage area of the data is not to be retained (the determination result is "No").

Next, for data of which a data area is determined to be retained in Step S12 as a target, the following procedure is performed. In other words, a procedure of determining whether or not a value of data has a possibility of being changed in accordance with execution of a continuation target system program SP1 is performed by the selector 45a (Step S13).

For example, it is determined that a variable of which a value is only referred to when the continuation target system program SP1 is executed after an initial value is set by an initialization procedure has no possibility of a value of the data being changed (the determination result is "No"). The reason for this is that, when an initialization procedure is performed after switching from the process control device 10 to the process control device 20 is performed, a value of data of such a variable becomes a value of the data before switching, and thus the value of the data does not need to be taken over.

Next, a procedure of selecting data of which a value of the data is determined to have a possibility of being changed in Step S13 as take-over data DT is performed by the selector 45a (Step S14: selection step). Next, for the data selected in Step S14 as a target, the following procedure is performed. In other words, a procedure of determining whether or not there is a possibility of the value of the data being changed in accordance with execution of the non-continuation target system program SP2 is performed by the selector 45a (Step S15). The reason for this is that it is premised that data (take-over data DT) required to be taken over for continuing the system function is not written by the non-continuation target system program SP2.

In a case in which it is determined that there is a possibility of the value of the data being changed in Step S15 (in a case in which the determination result is "No"), a procedure of adding the non-continuation target system program SP2 having a possibility of changing the value of the data to the continuation target system programs SP1 is performed by the selector 45a (Step S16). Then, the procedure of the flowchart illustrated in FIG. 3 is performed from the start. In other words, a procedure of listing data used by the continuation target system program SP1 and the non-continuation target system program SP2 having a possibility of changing the value of the data (Step S11) and selecting the data is performed by the selector 45a (Steps S12 to S14).

The reason for performing such a procedure is as below. In other words, in a case in which the determination result of Step S15 is "No", in a status in which the same data is written between a system function required to be continued and a system function not required to be continued, it can be regarded that there is a mutually-depending relation. The reason for this is that, in a case in which there is such a relation, a system function not required to be continued also needs to be continued similarly to the system function required to be continued.

On the other hand, in Step S15, in a case in which it is determined that the value of the data has no possibility of being changed (in a case in which the determination result is "Yes"), the series of procedures illustrated in FIG. 3 ends. The selected take-over data DT, for example, may be displayed in the display 42, stored in the storage 43, or transmitted to the outside through the communication device 44.

### «Specific example of system program»

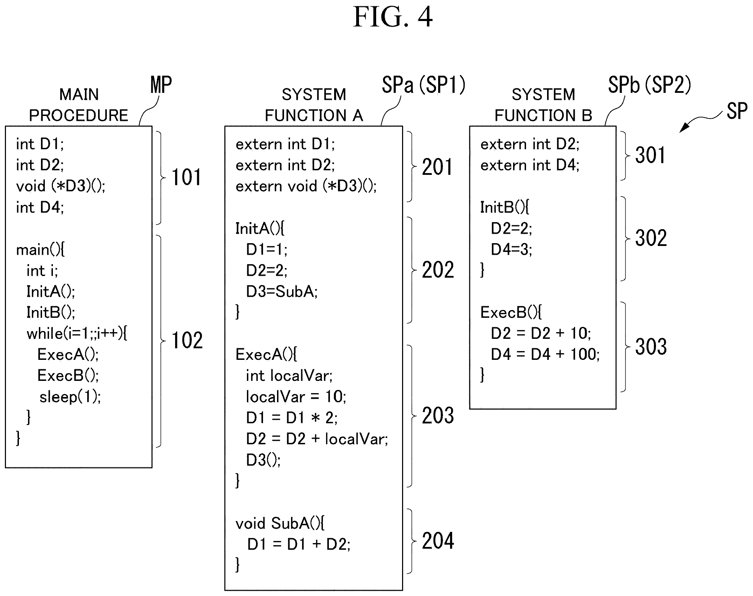

FIG. 4 is a diagram illustrating an example of a system program used in the program modification support method according to the first embodiment of the present invention. System programs SPa and SPb illustrated in FIG. 4 realize system functions called from a main procedure of process control. Hereinafter, the system function realized by the system program SPa will be referred to as "system function A", and the system function realized by the system program SPb will be referred to as "system function B".

Here, the system function A is assumed to be a system function required to be continued when switching from the process control device 10 to the process control device 20 is performed, and the system function B is assumed to be a system function not required to be continued. In other words, the system program SPa is assumed to be the continuation target system program SP1, and the system program SPb is assumed to be the non-continuation target system program SP2.

In a main program MP realizing a main procedure of the process control, there are a description 101 declaring external variables and a description 102 of a main function. In the example illustrated in FIG. 4, variables D1 and D2 of an integer type, a pointer variable D3 of a function pointer, and a variable D4 of the integer type are declared. Hereinafter, the variables D1 and D2 of the integer type, the pointer variable D3 of the function pointer, and the variable D4 of the integer type may be simply referred to external variables D1, D2, D3, and D4. In details of the main function, procedures of calling functions InitA and InitB that initialize the system functions A and B, and a procedure of repeatedly calling functions ExecA and ExecB executing the system functions A and B for every second are performed.

In the system program SPa, there are a description 201 referring to external variables of the main program MP, a description 202 of the function InitA, a description 203 of the function ExecA, and a description 204 of a function SubA. In the example illustrated in FIG. 4, in the system program SPa, declarations referring to variables D1 and D2 and the pointer variable D3 among the external variables of the main program MP are formed in the description 201. The function SubA is a function used only within the system program SPa. In the system program SPb, there are a description 301 referring to the external variables of the main program MP, a description 302 of the function InitB, and a description 303 of the function ExecB. In the example illustrated in FIG. 4, in the system program Spb, declarations referring to variables D2 and D4 among the external variables of the main program MP are formed in the description 301.

When the procedure of the flowchart illustrated in FIG. 3 starts, the system program SPa that is the continuation target system program SP1 is read from the storage 43, and data used in the system program SPa is listed in accordance with the procedure of Step S11. In the example illustrated in FIG. 4, external variables D1, D2, and D3 and a local variable localVar are listed.

Next, for each piece of the data that is listed, a determination of Step S12 is performed. In the example illustrated in FIG. 4, for the external variables D1, D2, and D3, it is determined that storage areas of data is to be retained (the determination result is "Yes"). On the other hand, for the local variable localVar, the local variable localVar becomes invalid when the procedure returns to the calling source (the main procedure) of the function ExecA, and thus it is determined that the storage area of the data is not to be retained (the determination result is "No").

Next, for each piece of data of which the data area is determined to be retained in Step S12, as a target the determination of Step S13 is performed. In the example illustrated in FIG. 4, for the external variables D1 and D2, the values are changed when the system function A is executed, and thus it is determined that there is a possibility of the value of the data being changed (the determination result is "Yes"). On the other hand, for the external variable D3, the value does not change after initialization of the system function A, and thus it is determined that there is no possibility of the value of the data being changed (the determination result is "No").

Next, the data of which the value is determined to have a possibility of being changed in Step S13 is selected as take-over data DT (Step S14). In the example illustrated in FIG. 4, the external variables D1 and D2 are selected as the take-over data DT. Next, for the selected take-over data DT as a target, the determination of Step S15 is performed. In the example illustrated in FIG. 4, the external variable D1 is not referred to by the system program SPb, and thus it is determined that there is no possibility of the value of the data being changed (the determination result is "Yes"). On the other hand, the external variable D2 is referred to by the system program SPb, and thus it is determined that there is a possibility of the value of the data being changed (the determination result is "No").

In the example illustrated in FIG. 4, it is determined that there is a possibility of the value of the data being changed in Step S15. For this reason, in the procedure of Step S16, the non-continuation target system program SP2 (the system program SPb) having a possibility of changing the value of the data is added to the continuation target system program SP1 (the system program SPa).

Then, the procedure of the flowchart illustrated in FIG. 3 is performed from the start, and, in accordance with the procedure of Step S11, data used in the system program SPa and data used in the system program SPb are listed. In the example illustrated in FIG. 4, the external variables D1, D2, D3, and D4 and the local variable localVar are listed.

Next, for each piece of the data that has been listed, the determination of Step S12 is performed. For example, switching is performed in a standby state before a next period after the control application 13 ends the procedure of the current period. In the example illustrated in FIG. 4, for the external variables D1, D2, D3, and D4, it is determined that a storage area of data is to be retained (the determination result is "Yes"). On the other hand, for the local variable local Var, it is determined that a storage area of data is not to be retained (the determination result is "No").

Next, for each piece of the data of which the data area is determined to be retained in Step S12 as a target, the determination of Step S13 is performed. In the example illustrated in FIG. 4, for the external variables D1 and D2, the values are changed when the system function A is executed. For the external variables D2 and D4, the values are changed when the system function B is executed. For this reason, for the external variables D1, D2, and D4 among the external variables D1, D2, D3, and D4, it is determined that there is possibility of values of the data being changed (the determination result is "Yes"). On the other hand, for the external variable D3, the value is not changed after initialization of the system function A, and thus it is determined that there is no possibility of the value of the data being changed (the determination result is "No".)

Next, the data of which the value is determined to have the possibility of being changed in Step S13 is selected as take-over data DT (Step S14). In the example illustrated in FIG. 4, the external variables D1, D2, and D4 are selected as take-over data DT. Next, for the selected take-over data DT as a target, the determination of Step S15 is performed. In the example illustrated in FIG. 4, the external variables D1, D2, and D4 are not referred to from the non-continuation target system program SP2 other than the system programs SPa and SPb, and thus it is determined that there is no possibility of the value of the data being changed (the determination result is "Yes"). In accordance with the description presented above, the series of procedures illustrated in FIG. 3 ends, and finally, the external variables D1, D2, and D4 are selected as take-over data DT.

As described above, in this embodiment, data required to be maintained for continuing the system function at the time of performing switching from the process control device 10 to the process control device 20 is selected from data used in the continuation target system program SP1. In accordance with this, a worker can easily perceive data required to be maintained for continuing the system function realized by the continuation target system program SP1. In this way, according to the embodiment of the present invention, a worker can be supported to be able to easily modify a system program in correspondence with an online system update without requiring a lot of effort.

### [Second embodiment]

### <Program modification support device>

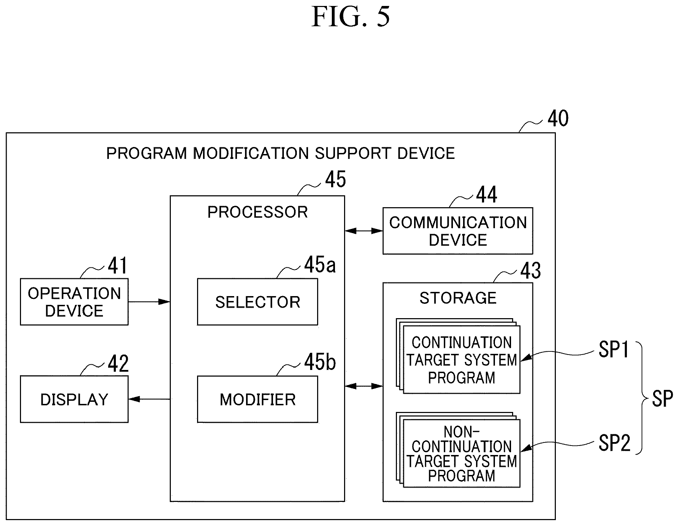

FIG. 5 is a block diagram illustrating a main part configuration of a program modification support device according to a second embodiment of the present invention. In FIG. 5, the same reference numerals are assigned to blocks corresponding to the blocks illustrated in FIG. 2. As illustrated in FIG. 5, the program modification support device 40 according to this embodiment has a configuration acquired by adding a modifier 45b to the processor 45 of the program modification support device 40 illustrated in FIG. 2. In the program modification support device 40 according to this embodiment, a system program SP is modified such that data selected by a selector 45a is taken over from a process control device 10 to a process control device 20.

The modifier 45b modifies a continuation target system program SP1 such that data selected by the selector 45a is taken over from the process control device 10 to the process control device 20. More specifically, the modifier 45b adds a new description (code) to the continuation target system program SP1, changes an existing description, and deletes an unnecessary description. For example, in a case in which data selected by the selector 45a is data stored in an address variable area, the continuation target system program SP1 is modified such that the data is stored in an address fixed area and is indicated using a pointer. A reason of a modification is that there is a possibility of taking data over using an address of the address variable area as value. Even if it is clear that an address of an address variable area is not stored in data selected by a current system program, there is a possibility of an address of the address variable area being stored therein in accordance with a future update of the system program. Details of the procedure performed by the modifier 45b will be described below.

Similar to the program modification support device 40 according to the first embodiment, the program modification support device 40 according to this embodiment, for example, is also realized by a computer such as a personal computer or a workstation. Similar to the function of the selector 45a, a function of the modifier 45b is realized by software by installing a program realizing the function of the modifier 45b in a computer. In other words, the function of the modifier 45b is realized by software and hardware resources in cooperation. The program modification support device 40 according to this embodiment may be realized using cloud computing or may be realized using dedicated hardware.

### <Program modification support method>

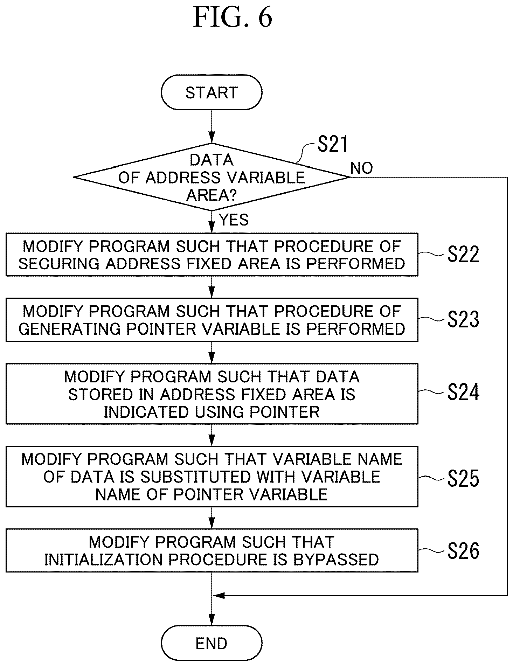

FIG. 6 is a flowchart illustrating a program modification support method according to the second embodiment of the present invention. When the procedure starts, first, a procedure of determining whether or not data selected by the selector 45a (take-over data DT) is data stored in an address variable area is performed by the modifier 45b (Step S21). In a case in which it is determined that the take-over data DT is data stored in the address variable area (in a case in which the determination result of Step S21 is "Yes"), a procedure of modifying the system program SP is performed by the modifier 45b such that a procedure of securing an address fixed area is performed (Step S22).

Next, a procedure of modifying the system program SP is performed by the modifier 45b such that a procedure of generating a pointer variable is performed (Step S23). Next, a procedure of modifying the system program SP is performed by the modifier 45b such that the take-over data DT stored in the address fixed area is indicated using a pointer (Step S24).

Next, a procedure of modifying the system program SP is performed by the modifier 45b such that a variable name of the take-over data DT is substituted by a variable name (a variable name to which an asterisk symbol is attached) of the pointer variable (Step S25). Then, a procedure of modifying the system program SP is performed by the modifier 45b such that an initialization procedure performed at the time of execution of the system program SP is bypassed (Step S26). In the procedure described above, the modification of the system program SP is completed.

On the other hand, in a case in which it is determined that the take-over data DT is data not stored in the address variable area (in a case in which the determination result of Step S21 is "No"), the procedure illustrated in FIG. 6 ends. The reason for this is that the take-over data DT is data stored in the address fixed area, and thus the system program SP does not need to be modified for performing taking over the take-over data DT.

When switching from the process control device 10 to the process control device 20 is performed, the take-over data DT stored in the address fixed area is copied from the process control device 10 to the process control device 20 by the online update controller 24 illustrated in FIG. 1. The address fixed area, as described above, is an area (a storage area) of which an address is not changed between before/after switching from the process control device 10 to the process control device 20. For this reason, the take-over data DT stored in the address fixed area of the process control device 10 is copied to an address fixed area (a storage area of which an address is the same as that of the address fixed area of the process control device 10) of the process control device 20.

### «Specific example of system program»

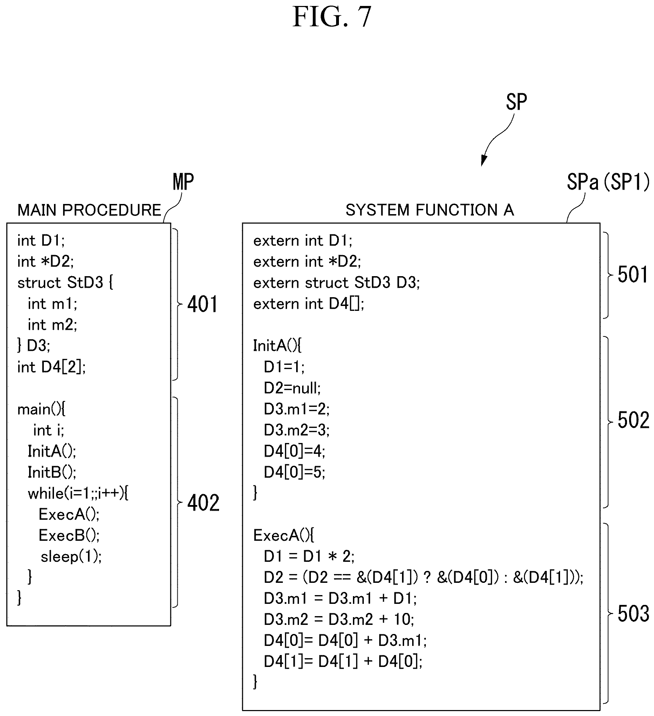

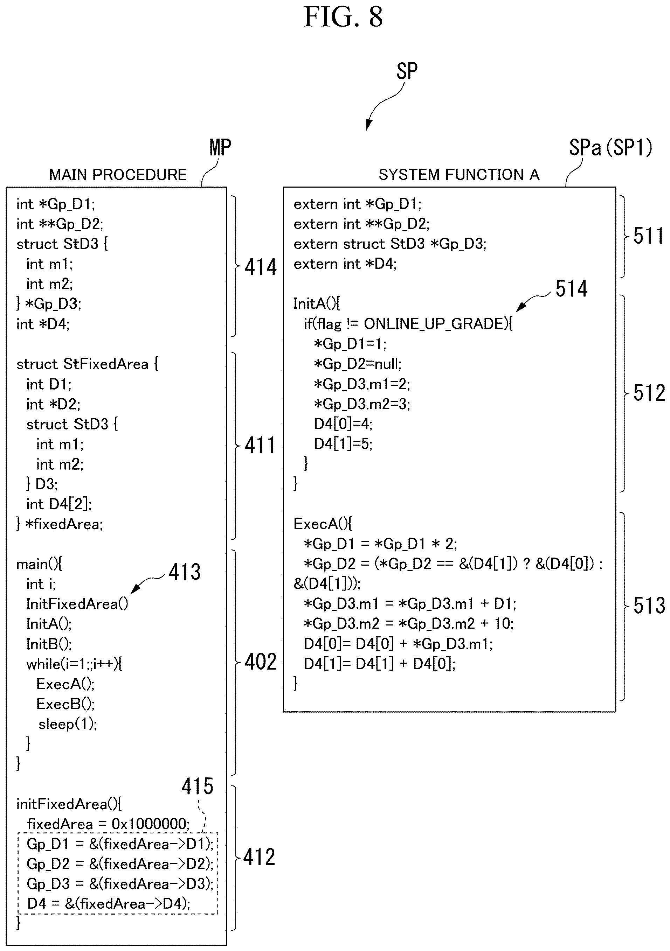

FIG. 7 is a diagram illustrating an example of a system program used in the program modification support method according to the second embodiment of the present invention. FIG. 8 is a diagram illustrating an example of a system program modified using the program modification support method according to the second embodiment of the present invention. In FIGS. 7 and 8, for simplification of description, only programs corresponding to the main program MP and the system program SPa illustrated in FIG. 4 are illustrated, and illustration of a program corresponding to the system program SPb is omitted. In addition, for the convenience of description, details of a main program MP and a system program SPa illustrated in FIGS. 7 and 8 are configured to be different from those illustrated in FIG. 4.

In the main program MP illustrated in FIG. 7, there are a description 401 declaring external variables and a description 402 of a main function. In the example illustrated in FIG. 7, a variable D1 of the integer type, a pointer variable D2 of the integer type, a structure variable D3 having variables m1 and m2 of the integer type as its members, and an array variable D4 having two elements of the integer type are declared as external variables. Details of the description 402 of the main function are the same as those of the description 102 of the main function illustrated in FIG. 4.

In the system program SPa illustrated in FIG. 7, there are a description 501 referring to external variables of the main program MP, a description 502 of a function InitA, and a description 503 of a function ExecA. In the example illustrated in FIG. 7, in the description 501, a declaration referring to all the external variables (the external variables D1, D2, D3, and D4) of the main program MP is formed. For the convenience of description, the description 502 of the function InitA and the description 503 of the function ExecA are configured to be different from the description 202 of the function InitA and the description 203 of the function ExecA illustrated in FIG. 4.

When the procedure of the flowchart illustrated in FIG. 6 starts, first, it is determined whether or not take-over data DT is data stored in the address variable area in Step S21. Here, for the convenience of description, all the external variables D1, D2, D3, and D4 declared in the main program MP are assumed to be take-over data DT and are assumed to be data stored in the address variable area. For this reason, the determination result of Step S21 is "Yes".

Next, in Step S22, the system program SP is modified such that a procedure of securing an address fixed area is secured. More specifically, as illustrated in FIG. 8, descriptions 411 and 412 are added, and the description 402 of the main function is modified. The description 411 declares a structure variable fixedArea having the take-over data DT (the external variables D1, D2, D3, and D4) as its elements. The description 412 relates to a function InitfixedArea that initializes the address fixed area. In the example illustrated in FIG. 8, details of the function InitfixedArea are for performing a procedure of setting a first address (0x1000000) of the address fixed area to the structure variable fixedArea. The description 402 of the main function is modified to details in which the description 413 for calling the function InitfixedArea is added.

Next, in Step S23, the system program SP is modified such that a procedure of generating pointer variables is performed. More specifically, the description 401 of the main program MP illustrated in FIG. 7 is changed to a description 414 of the main program illustrated in FIG. 8. In other words, the description 101 declaring the external variables D1, D2, D3, and D4 is changed to a description 414 declaring pointer variables Gp_D1, Gp_D2, and Gp-D3, and D4.

Next, in Step S24, the system program SP is modified such that take-over data DT stored in the address fixed area is indicated using pointers. More specifically, the description 412 of the function InitfixedArea is modified. More specifically, as illustrated in FIG. 8, a description 415 setting addresses of the address fixed area in which take-over data DT (the external variables D1, D2, D3, and D4) is stored to pointer variables Gp_D1, Gp_D2, Gp_D3, and D4 is added.

Next, in Step S25, the system program SP is modified such that variable names of the take-over data DT are substituted with variable names of pointer variables (variable names to which an asterisk symbol is attached). More specifically, as illustrated in FIG. 8, the variable names of the external variables D1, D2, D3, and D4 described in the system program SPa illustrated in FIG. 7 are respectively substituted with variable names of pointer variables (variable names to which an asterisk symbol is attached) *Gp_D1, *Gp_D2, *Gp_D3, and *D4. In accordance with this, the descriptions 501, 502, and 503 illustrated in FIG. 7 are respectively changed to descriptions 511, 512, and 513 illustrated in FIG. 8.

Finally, in Step S26, the system program SP is modified such that the initialization procedure performed when the system program SP is executed is bypassed. More specifically, as illustrated in FIG. 8, a description 514 is added to the description 512 of the function InitA. Here, the description 514 causes the function InitA initializing the system function A not to be substantially performed (to be bypassed) in a case in which an online system update is performed (in a case in which a value of the variable flag is the same as a value of ONLINE_UP_GRADE). In this way, the system program SP illustrated in FIG. 7 is modified to the system program SP illustrated in FIG. 8.

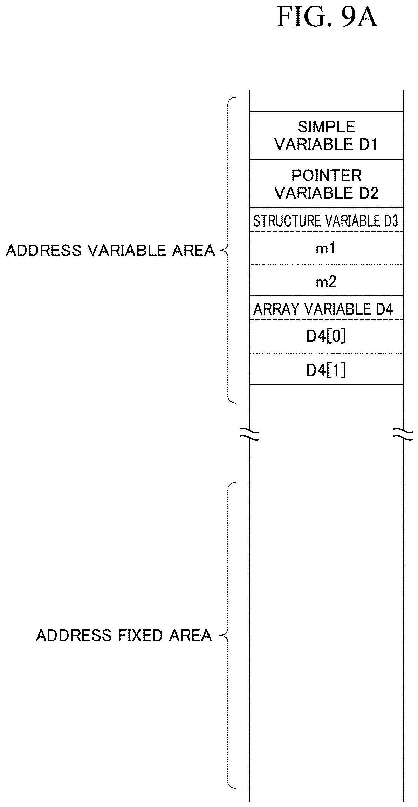

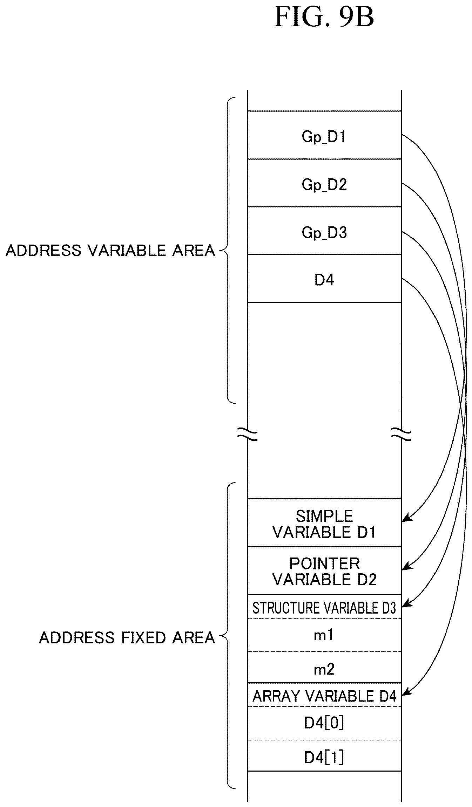

FIGS. 9A and 9B are diagrams illustrating an example of memory maps acquired in a case in which system programs before modification and after modification are executed in the second embodiment of the present invention. In a case in which the system program SP before modification illustrated in FIG. 7 is executed, as illustrated in FIG. 9A, values of external variables are stored in the address variable area. On the other hand, in a case in which the system program SP after modification illustrated in FIG. 8 is executed, as illustrated in FIG. 9B, values of data stored in the address fixed area are referred to using pointers stored in the address variable area. The take-over data DT stored in the address fixed area of the process control device 10 can be easily copied to the process control device 20. For this reason, the system program SP illustrated in FIG. 8 can be regarded to be in correspondence with an online system update.

As above, in this embodiment, the modifier 45b modifies the system program SP such that data selected by the selector 45a is taken over from the process control device 10 to the process control device 20. In accordance with this, a worker does not need to manually modify the system program SP or may only perform a minor modification. In this way, according to the embodiment of the present invention, a worker can be supported such that a system program is able to be easily modified in correspondence with an online system update without requiring a lot of effort.

### [Third embodiment]

### <Program modification support device>

A program modification support device according to this embodiment is different from the program modification support device 40 illustrated in Fig 5 slightly in a procedure performed by a modifier 45b and is similar to that illustrated in FIG. 5 other than the procedure performed by the modifier 45b. For this reason, detailed description of the program modification support device according to this embodiment will be omitted. In the program modification support device 40 according to this embodiment, similar to the program modification support device 40 according to the second embodiment, a system program SP is modified such that data selected by a selector 45a is taken over from a process control device 10 to a process control device 20.

### <Program modification support method>

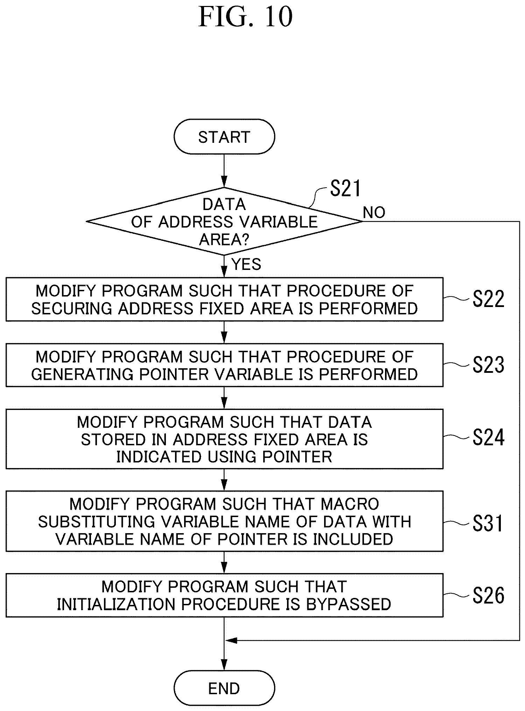

FIG. 10 is a flowchart illustrating a program modification support method according to the third embodiment of the present invention. In FIG. 10, the same reference signs are assigned to the same steps as the steps of the flowchart illustrated in FIG. 6. In the flowchart illustrated in FIG. 10, Step S25 represented in the flowchart illustrated in FIG. 6 is changed to Step S31.

In Step S31, a procedure of modifying the system program SP is performed by the modifier 45b such that a macro converting variable names of the take-over data DT is included. The macro described above is a macro that converts variable names of take-over data DT stored in the address variable area among variables names described in the system program SP into variable names of pointer variables (variable names to which an asterisk symbol is attached). Here, an array variable represents a pointer using an array name, and thus, in a case in which the array variable is included in the take-over data DT, a macro that converts the variable name of the array variable is not included.

### «Specific example of system program»

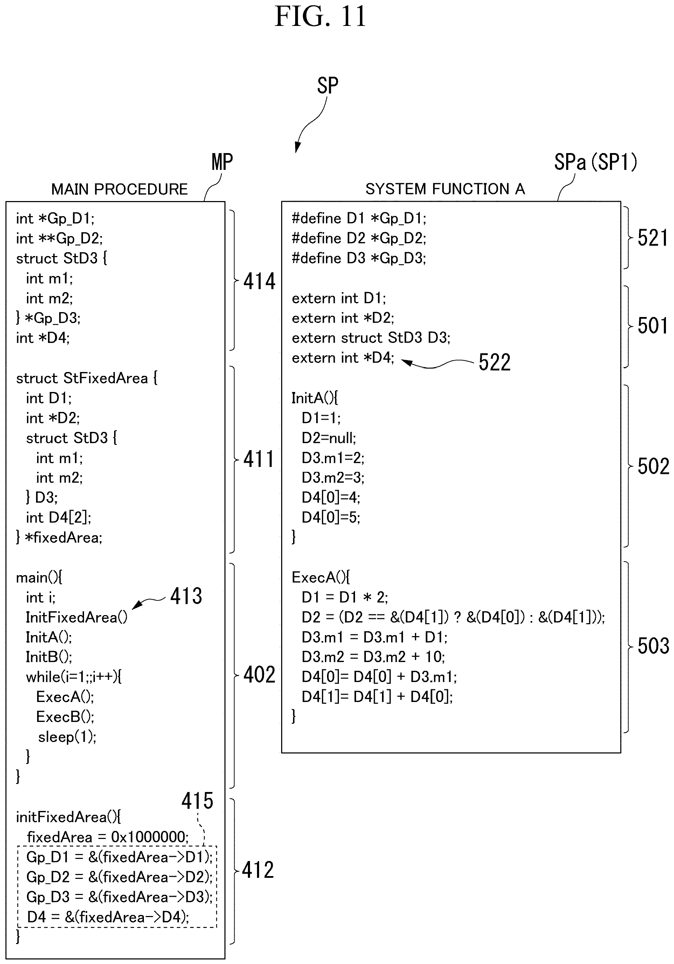

FIG. 11 is a diagram illustrating an example of a system program modified in the program modification support method according to the third embodiment of the present invention. A system program before modification is illustrated in FIG. 7. In FIG. 11, the same reference numerals are assigned to descriptions corresponding to the descriptions of the system program SP illustrated in FIG. 8. Here, in this embodiment, a modified main program MP is as illustrated in FIG. 8.

By performing the procedure of Step S31 illustrated in FIG. 10, the system program SP illustrated in FIG. 7, as illustrated in FIG. 11, is modified such that a description 521 is added, and a part of the description 501 is changed. The description 521 is a macro that converts variable names of take-over data DT stored in the address variable area into variable names of pointer variables (variable names to which an asterisk symbol is attached). More specifically, the variable names of the external variables D1, D2, and D3 are respectively substituted with variable names of pointer variables (variable names to which an asterisk symbol is attached) *Gp_D1, *Gp_D2, and *Gp_D3. Here, an external variable D4 included in the take-over data DT is an array, and thus a macro that converts the variable name of the external variable D4 is not included.

The change of the description 501 is to change a declaration of the external variable D4 included in the take-over data DT into a pointer declaration. In other words, the description relating to the external variable D4 is changed to a description 522 illustrated in FIG. 11. In the description 501 of the system program SPa illustrated in FIG. 7, while a declaration of the external variable D4 included in the take-over data DT is performed as an array declaration, in order to change this into a pointer declaration, a part of the description 501 is changed.

In this way, the system program SP illustrated in FIG. 7 is modified to the system program SP illustrated in FIG. 11. Similar to the system program SP illustrated in FIG. 8, the system program SP illustrated in FIG. 11 refers to values of data stored in the address fixed area using pointers stored in the address variable area (see FIG. 9B). The take-over data DT stored in the address fixed area of the process control device 10 can be easily copied to the process control device 20. For this reason, the system program SP illustrated in FIG. 11 can be also regarded to be in correspondence with an online system update.

As above, similar to the second embodiment, in this embodiment, the modifier 45b modifies the system program SP such that data selected by the selector 45a is taken over from the process control device 10 to the process control device 20. In accordance with this, a worker does not need to manually modify the system program SP or may only perform a minor modification. In this way, according to the embodiment of the present invention, a worker can be supported such that a system program is able to be easily modified in correspondence with an online system update without requiring a lot of effort.

In addition, in this embodiment, the system program SP is modified such that a macro converting variable names of the take-over data DT stored in the address variable area into variable names of pointer variables (variable names to which an asterisk symbol is attached) is included. By including such a macro in the system program SP, similar to the second embodiment, not all the variable names of the take-over data DT described in the system program need to be substituted with variable names of pointer variables (variable names to which an asterisk symbol is attached). In other words, the number of modification sites of the system program SP can be smaller than that of the second embodiment. In accordance with this, for example, even in a case in which a worker needs to check details of the system program SP after modification, a burden (effort) of the operator can be reduced.

### [Fourth embodiment]

### <Program modification support device>

A program modification support device according to this embodiment is different from the program modification support device 40 illustrated in Fig 5 slightly in a procedure performed by a modifier 45b and is similar to that illustrated in FIG. 5 other than the procedure performed by the modifier 45b. For this reason, detailed description of the program modification support device according to this embodiment will be omitted. The program modification support device 40 according to this embodiment, similar to the second and third embodiments, inhibits performance degradation that may occur in a case in which data stored in the address fixed area is referred to through pointers.

In a case in which the system program SP is modified as in the second and third embodiments, an access to data is changed from a direct access to an indirect access through a pointer. In a case in which such a change is made, for example, accesses to a simple variable and a pointer variable storing a numerical value and a character string are also changed from direct accesses to indirect accesses, and there is a possibility of having high influence on the performance. This embodiment inhibits performance degradation that may occur in a case in which such changes of accesses are made. An access to an array variable or a structure variable is frequently an indirect access through a pointer, and thus the influence thereof on the performance is regarded to be small, and such variables are not taken into account in this embodiment.

### <Program modification support method>

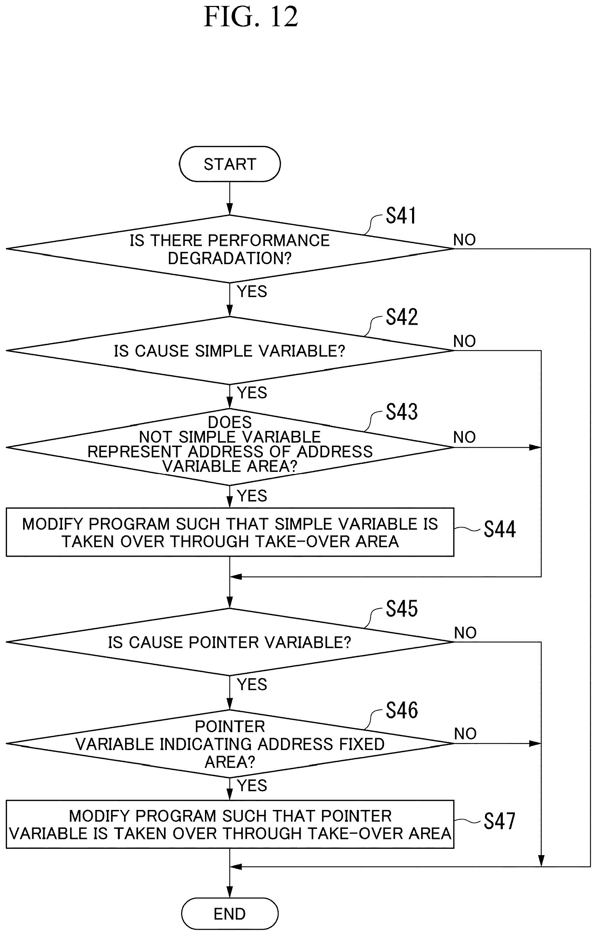

FIG. 12 is a flowchart illustrating a program modification support method according to the fourth embodiment of the present invention. A procedure of the flowchart illustrated in FIG. 12, for example, starts when the procedure illustrated in FIG. 10 (the procedure according to the second embodiment) ends. When the procedure starts, first, a procedure of determining whether or not there is performance degradation in each piece of take-over data DT is performed by the modifier 45b (Step S41).

Here, in a case in which performance degradation of a specified value or more can be checked compared to that before simple variables and pointer variables, which are targets, are substituted using macros, it is determined that there is performance degradation. For example, in a case in which the take-over data DT is a simple variable or a pointer variable storing a numerical value or a character string, it is determined that there is performance degradation (the determination result is "Yes"). On the other hand, in a case in which the take-over data DT is an array variable or a structure variable, it is determined that there is no performance degradation (the determination result is "No").

In a case in which it is determined that there is performance degradation (in a case in which the determination result is "Yes") in Step S41, a procedure of determining whether or not a cause of the performance degradation is a simple variable is performed by the modifier 45b (Step S42). In a case in which it is determined that a cause of the performance degradation is a simple variable (in a case in which the determination result is "Yes") in Step S42, a procedure of determining whether or not the simple variable represents an address of the address variable area is performed by the modifier 45b (Step S43). In a case in which it is determined that the simple variable represents an address of the address variable area (in a case in which the determination result is "No"), the address of the address variable area cannot be taken over, and thus performance improvement is given up.

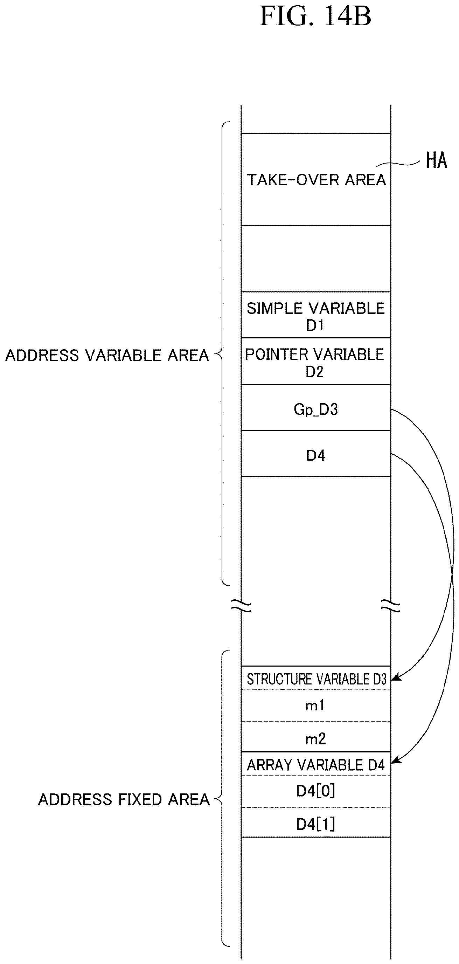

On the other hand, in a case in which it is determined that the simple variable does not represent an address of the address variable area (in a case in which the determination result is "Yes"), a procedure of modifying the system program SP is performed by the modifier 45b such that the simple variable is taken over through a take-over area HA (Step S44). Here, the take-over area HA is an area (a storage area) that is temporarily secured for taking over take-over data DT from the process control device 10 illustrated in FIG. 1 to the process control device 20 (see FIG. 14B).

In a case in which the determination result of Step S42 is "No", in a case in which the determination result of Step S43 is "No", or in a case in which the procedure of Step S44 ends, a procedure of determining whether or not a cause of performance degradation is a pointer variable is performed by the modifier 45b (Step S45). In a case in which it is determined that the cause of the performance degradation is a pointer variable (in a case in which the determination result is "Yes") in Step S45, a procedure of determining whether or not the pointer variable is a pointer variable indicating an address of the address fixed area is performed by the modifier 45b (Step S46). In a case in which it is determined that the pointer variable is not a pointer variable indicating an address of the address fixed area (in a case in which the determination result is "No"), the address of the address variable area cannot be taken over, and thus performance improvement is given up.

On the other hand, in a case in which it is determined the pointer variable is a pointer variable indicating an address of the address fixed area (in a case in which the determination result is "Yes"), a procedure of modifying the system program SP is performed by the modifier 45b such that the pointer variable is taken over through the take-over area HA (Step S47). In a case in which the determination result of Step S41 is "No", in a case in which the determination result of Step S45 is "No", in a case in which the determination result of Step S46 is "No", or in a case in which the procedure of Step S47 ends, a series of procedures illustrated in FIG. 12 ends.

### «Specific example of system program»

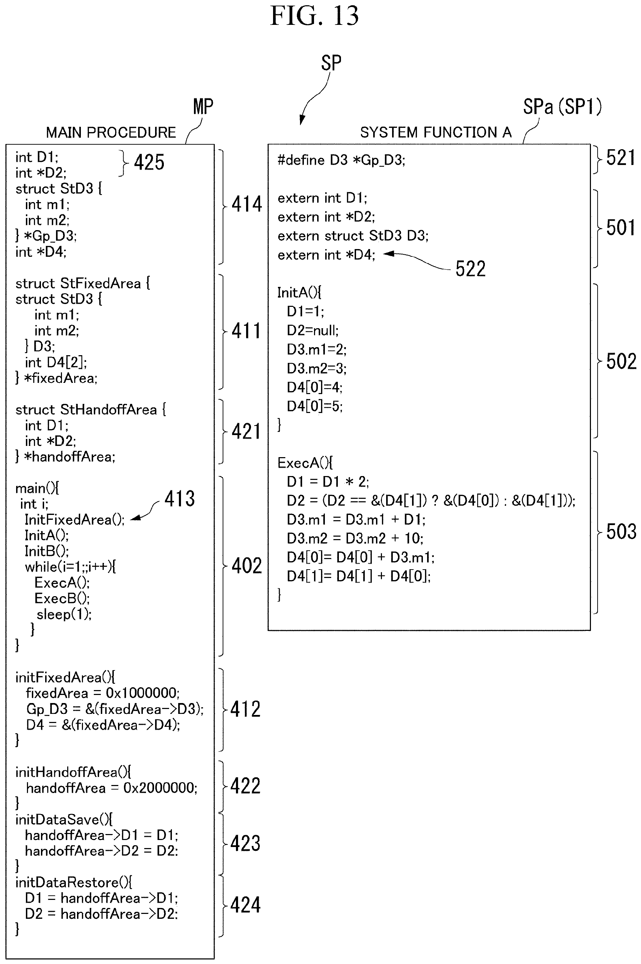

FIG. 13 is a diagram illustrating an example of a system program modified in accordance with the program modification support method according to the fourth embodiment of the present invention. The system program before modification is illustrated in FIG. 11. In FIG. 13, the same reference signs are assigned to descriptions corresponding to the descriptions of the system program SP illustrated in FIG. 11.

Here, for simplification of description, in a case in which external variables D1 and D2 (a simple variable D1 and a pointer variable D2) illustrated in FIG. 7 are stored in an address fixed area and are referred to through a pointer, it is assumed that performance degradation occurs. In this case, in accordance with Step S44 illustrated in FIG. 12, the system program SP is modified such that the simple variable D1 is taken over through the take-over area HA. In addition, in accordance with Step S47 illustrated in FIG. 12, the system program SP is modified such that the pointer variable D2 is taken over through the take-over area HA.

By performing procedures of Steps S44 and S47 illustrated in FIG. 12, the main program MP illustrated in FIG. 11, as illustrated in FIG. 13, is modified such that descriptions 421, 422, 423, and 424 are added, and parts of the descriptions 411, 412, and 414 are changed. The description 421 declares a structure variable handoffArea that defines a data structure (a data structure having the simple variable D1 and the pointer variable D2 as its elements) of the take-over area HA.

The description 422 relates to a function initHndoffArea that initializes the take-over area HA. In the example illustrated in FIG. 13, the function initHndoffArea has details in which a procedure of setting the first address (0x2000000) of the take-over area HA to the structure variable handoffArea is performed. Here, the take-over area HA does not need to be an address fixed area and may be an address variable area. Thus, the first address of the take-over area HA may be different between before/after switching from the process control device 10 to the process control device 20. Here, the size of the take-over area HA needs to be the same before/after switching from the process control device 10 to the process control device 20. The description 423 relates to a function initDataSave that stores data in the take-over area HA, and the description 424 relates to a function initDataRestore that takes out data from the take-over area HA. After initialization of the system function, when the function initDataRestore is called, the initialization does not need to be bypassed.

The change of the description 411 is to delete the external variables D1 and D2 from members of the structure variable fixedArea and cause only the external variables D3 and D4 to remain. The change of the description 412 is to delete descriptions relating to the pointer variables Gp_D1 and Gp_D2 and set addresses of the address fixed area only for the pointer variables Gp_D3 and D4 in the function InitfixedArea. The change of the description 414 is to change a description declaring the pointer variables Gp_D1 and Gp_D2 to a description 425 declaring the external variables D1 and D2.

In addition, by performing procedures of Steps S44 and S47 illustrated in FIG. 12, the system program SPa illustrated in FIG. 11, as illustrated in FIG. 13, is modified such that the description 521 is partly changed. The change of the description 521 is to delete a macro relating to the external variables D1 and D2 and cause only a macro relating to the external variable D3 to remain. Although details will be described below, the external variables D1 and D2 are taken over from the process control device 10 to the process control device 20 through the take-over area HA. For this reason, the change of the description 521 can be regarded as a modification of deleting a macro relating to variable names of data taken over from the process control device 10 to the process control device 20 through the take-over area HA.

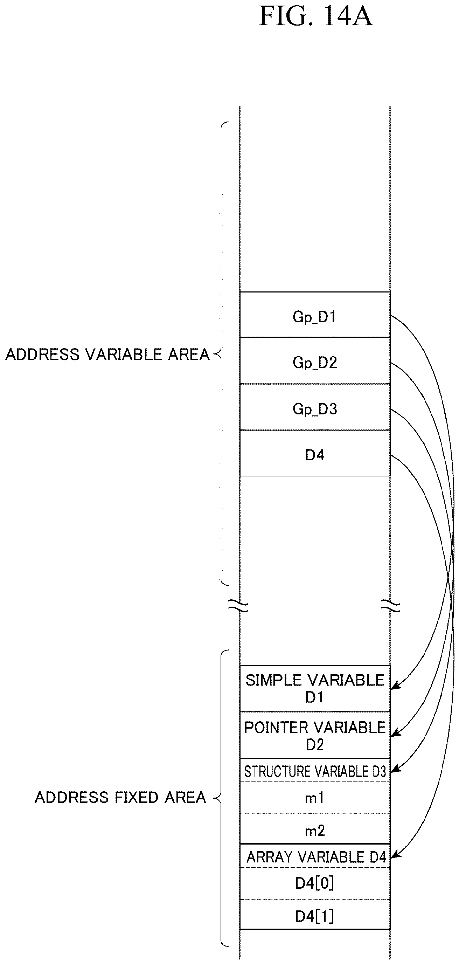

FIGS. 14A and 14B are is diagrams illustrating an example of memory maps acquired in a case in which system programs before modification and after modification are executed in the fourth embodiment of the present invention. In a case in which the system program SP before modification illustrated in FIG. 11 is executed, as illustrated in FIG. 14A, values of external variables D1, D2, D3, and D4 stored in the address fixed area are respectively referred to using pointers Gp_D1, Gp_D2, Gp_D3, and D4 stored in the address variable area.

On the other hand, in a case in which the system program SP after modification illustrated in FIG. 13 is executed, as illustrated in FIG. 14B, the external variables D1 and D2 stored in the address variable area are directly referred to. The values of the external variables D3 and D4 stored in the address fixed area, similar to those before modification, are respectively referred to using the pointers Gp_D3 and D4 stored in the address variable area. When switching from the process control device 10 to the process control device 20 is performed, the external variables D1 and D2 stored in the address variable area are taken over from the process control device 10 to the process control device 20 through the take-over area HA illustrated in FIG. 14B.

Here, in a case in which data to be taken over represents an address of the address variable area, the data cannot be taken over from the process control device 10 to the process control device 20 through the take-over area HA. In this embodiment, by providing the procedures of Steps S43 and S46 illustrated in FIG. 12, such data is not included in data to be taken over through the take-over area HA.

As above, in this embodiment, similar to the second and third embodiments, it is determined whether or not there is a possibility of occurrence of performance degradation in a case in which data stored in the address fixed area is referred to through a pointer. Then, the system program SP is modified such that data having a possibility of performance degradation is changed to be directly referred to and is taken over from the process control device 10 to the process control device 20 through the take-over area HA secured in advance. In accordance with this, a worker can inhibit performance degradation without performing a significant modification of the system program SP through a manual operation. In this way, according to the embodiment of the present invention, a worker can be supported to be able to easily modify a system program in correspondence with an online system update without requiring a lot of effort.

### [Fifth embodiment]

### <Program modification support device>

A program modification support device according to this embodiment is different from the program modification support device 40 illustrated in Fig 5 slightly in a procedure performed by a modifier 45b and is similar to that illustrated in FIG. 5 other than the procedure performed by the modifier 45b. For this reason, detailed description of the program modification support device according to this embodiment will be omitted. In the program modification support device 40 according to this embodiment, even in a case in which data of the address variable area cannot be moved to the address fixed area, and the data is taken over from the process control device 10 to the process control device 20 with an address value of the address variable area being avoided from being taken over.

The second to fourth embodiments described above are on the basis of a premise that data of the address variable area can be moved to the address fixed area. However, depending on a type of data, the data may not be able to be moved to the address fixed area. For example, in the case of a program described using the C language as an example, there is a case in which a calling function takes over a function pointer value of a callback function that is dynamically changed when switching from the process control device 10 to the process control device 20 is performed. In this case, a program load area of each function indicated by each function pointer becomes different before/after a modification in accordance with the program modification of another function, and thus the function pointer may be regarded as an address within the address variable area. However, this program load area is determined using a language processing system, and thus it is difficult to fix the address through a modification of the program or the like.

### <Program modification support method>

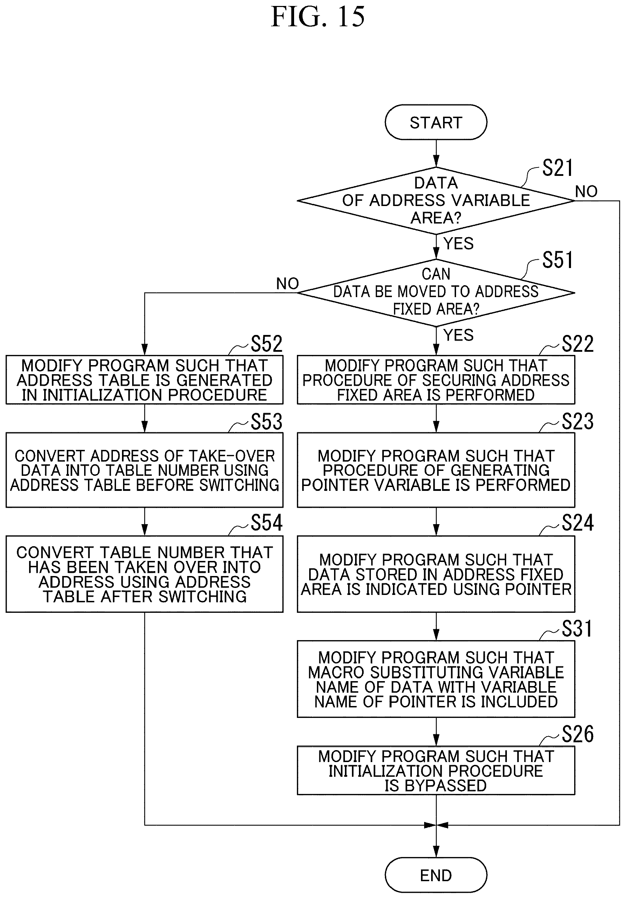

FIG. 15 is a flowchart illustrating a program modification support method according to the fifth embodiment of the present invention. In FIG. 15, the same reference signs are assigned to the same steps as the steps of the flowchart illustrated in FIG. 10. In the flowchart illustrated in FIG. 15, procedures of Steps S51 to S54 are added to the flowchart illustrated in FIG. 10.

In a case in which it is determined that data (take-over data DT) selected by a selector 45a is data stored in an address variable area (in a case in which the determination result is "Yes") in Step S21, the procedure of Step S51 is performed. In Step S51, a procedure of determining whether or not data of the address variable area can be moved to the address fixed area is performed by a modifier 45b. In a case in which it is determined that data of the address variable area can be moved to the address fixed area (in a case in which the determination result is "Yes"), a procedure of Step S22 is performed. Procedures of Steps S22, S23, S24, S31, and S26 have been described in the third embodiment, and thus description thereof will be omitted.

On the other hand, in a case in which it is determined that data of the address variable area cannot be moved to the address fixed area (in a case in which the determination result is "No"), a procedure of modifying the system program is performed by the modifier 45b such that an address table is generated in an initialization procedure (Step S52). Here, the address table described above is a table in which an address of data stored in the address variable area is registered. For example, in this address table, a function pointer value of a callback function is registered.

Next, a procedure of modifying the system program SP is performed by the modifier 45b such that a first conversion procedure described below is performed using the address table before switching from the process control device 10 to the process control device 20 (Step S53).

### First conversion procedure: Procedure of converting an address of take-over data DT stored in the address variable area into a table number

Next, a procedure of modifying the system program SP is performed by the modifier 45b such that a second conversion procedure described below is performed using the address table after switching from the process control device 10 to the process control device 20 (Step S54).

Second conversion procedure: Procedure of converting a table number that has been taken over into an address of the take-over data DT stored in the address variable area

### «Specific example of system program»

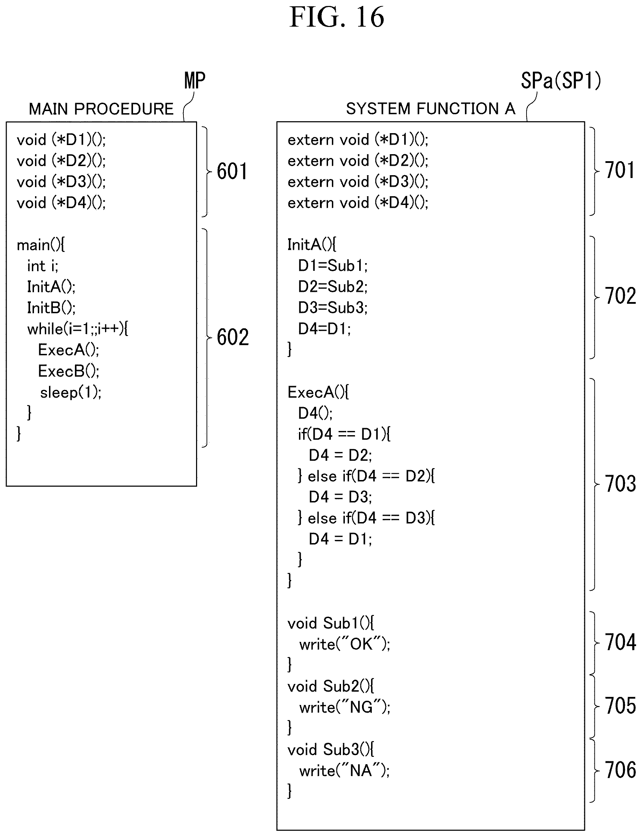

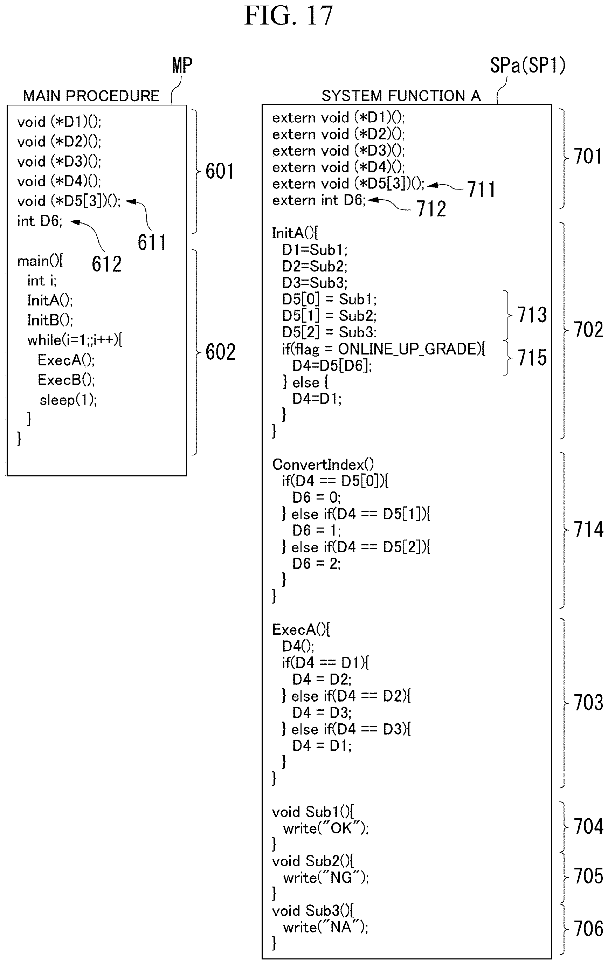

FIG. 16 is a diagram illustrating an example of a system program before modification used in the program modification support method according to the fifth embodiment of the present invention. FIG. 17 is a diagram illustrating an example of a system program modified using the program modification support method according to the fifth embodiment of the present invention. In FIGS. 16 and 17, similar to FIGS. 7 and 8, only programs corresponding to the main program MP and the system program SPa illustrated in FIG. 4 are illustrated, and illustration of a program corresponding to the system program SPb is omitted. In addition, for the convenience of description, details of the main program MP and the system program SPa illustrated in FIGS. 16 and 17 are configured to be different from those illustrated in FIGS. 7 and 8.

In the main program MP illustrated in FIG. 16, there are a description 601 declaring external variables and a description 602 of a main function. In the example illustrated in FIG. 16, function pointers D1, D2, D3, and D4 are declared as external variables. Details of the description 602 of the main function are the same as those of the description 402 of the main function illustrated in FIG. 7.

In the system program SPa illustrated in FIG. 16, there are a description 701 referring to external variables of the main program MP, a description 702 of a function InitA, a description 703 of a function ExecA, a description 704 of a function Sub1, a description 705 of a function Sub2, and a description 706 of a function Sub3. In the example illustrated in FIG. 16, in the description 701, a declaration referring to all the external variables (the external variables D1, D2, D3, and D4) of the main program MP is formed. For the convenience of description, the description 702 of the function InitA and the description 703 of the function ExecA are configured to be different from the description 502 of the function InitA and the description 503 of the function ExecA illustrated in FIG. 7. The function Sub1, the function Sub2, and the function Sub3 are functions that are used only within the system program SPa.

The function InitA has details in which a procedure of setting function pointers of the function Sub1, the function Sub2, and the function Sub3 to the external variables D1, D2, and D3 and setting the value of the external variable D1 to the external variable D4 is performed as an initialization procedure. Here, the external variable D4 is prepared for storing a function pointer of a function executed when the function ExecA is called by the main function next (after one second).

The function ExecA has details in which a procedure of executing a function indicated by the external variable D4 and thereafter changing (setting) details of the external variable D4 is performed. In the example illustrated in FIG. 16, details of the external variables are set as below. In other words, when the external variable D4 is the same as the external variable D1, details of the external variable D4 are set to the details of the external variable D2. When the external variable D4 is the same as the external variable D2, details of the external variable D4 are set to the details of the external variable D3. When the external variable D4 is the same as the external variable D3, details of the external variable D4 are set to the details of the external variable D1. In other words, the details of the external variable D4 are set such that the function Sub1, the function Sub2, and the function Sub3 are sequentially executed when the function ExecA is called.

When the procedure illustrated in FIG. 15 starts, first, it is determined whether or not the take-over data DT is data stored in the address variable area in Step S21. Here, for the convenience of description, all the external variables D1, D2, D3, and D4 declared in the main program MP are assumed to be take-over data DT and are assumed to be data stored in the address variable area. For this reason, the determination result of Step S21 is "Yes".

Next, in Step S51, it is determined whether or not the external variables D1, D2, D3, and D4 can be moved to the address fixed area. The external variables D1, D2, D3, and D4 store function pointers of the function Sub1, the function Sub2, and the function Sub3 of the system program SPa, and thus the determination result of Step S51 is "No".

Next, in Step S52, a procedure of modifying the system program SP is performed such that an address table is generated in the initialization procedure. More specifically, as illustrated in FIG. 17, descriptions 611 and 612 are added to the description 601 of the main program MP, descriptions 711 and 712 are added to the description 701 of the system program SPa, and a descriptions 713 and 715 are added to the description 702.

The description 611 of the main program MP declares an array variable D5 (hereinafter, it may be also referred to as an "address table D5") having three elements that can store function pointers as external variables. In addition, the description 612 of the main program MP declares a variable D6 of the integer type storing a number of an element of the array variable D5 (hereinafter, it may be also referred to as a "table number of an address table D5") as an external variable.

The descriptions 711 and 712 of the system program SPa respectively refer to the external variables D5 and D6 of the main program MP. In addition, the description 713 of the system program SPa performs an initialization procedure of the address table D5 in the function InitA performing the initialization procedure. More specifically, the function pointers of the function Sub1, the function Sub2, and the function Sub3 are set in the address table D5.

The address table D5 is generated when the function InitA is executed. In a case in which the system program SP illustrated in FIG. 17 is executed by the process control device 10, an address table is generated at the time of starting the system of the process control device 10 (for example, at the time of starting). In addition, in a case in which the system program SP illustrated in FIG. 17 is executed by the process control device 20, an address table is generated at the time of starting the system of the process control device 20 (for example, at the time of starting).

Next, in Step S53, before switching from the process control device 10 to the process control device 20, a procedure of modifying the system program SP is performed such that a procedure of converting an address into a table number is performed using the address table. More specifically, as illustrated in FIG. 17, the description 714 of a function Convertlndex is added to the system program SPa.

The function Convertlndex has details in which a procedure of changing (setting) the value of the external variable D6 is performed in accordance with details of the external variable D4. In the example illustrated in FIG. 17, the values of the external variable D6 as set as below. In other words, when the external variable D4 is equal to the external variable D5[0], the value of the external variable D6 is set to "0". When the external variable D4 is equal to the external variable D5[1], the value of the external variable D6 is set to "1". When the external variable D4 is equal to the external variable D5[2], the value of the external variable D6 is set to "2".

Then, in Step S54, after switching from the process control device 10 to the process control device 20, a procedure of modifying the system program SP such that a table number is converted into an address using the initialized address table is performed. More specifically, as illustrated in FIG. 17, a description 715 is added to the description 702 of the system program SPa.

In a case in which an online system update is performed (in a case in which the value of a variable flag is equal to the value of ONLINE_UP_GRADE), the description 715 sets an address stored in a specific element of the address table D5 to the external variable D4. The specific element described above is an element that is specified using the value of the external variable D6 (the table number).

Here, a case in which "0" as the value of the external variable D6 is taken over will be described. Before switching from the process control device 10 to the process control device 20, a function pointer of the function Sub1 is stored in the external variable D5[0] (an element of which a table number of the address table D5 is "0"). After switching from the process control device 10 to the process control device 20, by executing the details of the description 715, a function pointer of the function Sub1 is stored in the external variable D5[0] (an element of which a table number of the address table D5 is "0").

In this way, in this embodiment, the function pointer value of the function Sub1 is taken over through the value of the external variable D6 (the table number of the address table D5), in other words, indirectly. Even if there is a difference between the value of the function pointer of the function Sub1 after switching from the process control device 10 to the process control device 20 and the value of the function pointer of the function Sub1 after the switching, the function pointer value can be taken over through the external variable D6 without causing any problem.

As above, in this embodiment, in a case in which data of the address variable area cannot be moved to the address fixed area, the system program SP is modified such that an address table is generated at the time of executing the system program SP. Then, the system program SP is modified such that a procedure of taking over the table number of the address table generated before switching from the process control device 10 to the process control device 20 and using the table number as a table number of an address table generated after switching is performed.

In accordance with this, even in a case in which data of the address variable area cannot be moved to the address fixed area, the data can be taken over from the process control device 10 to the process control device 20. By using this modification, in the fourth embodiment, even if a numerical value of a simple variable or a pointer variable represents an address of the address variable area, it can be taken over. For that purpose, an address list that can be set for each variable is created on the address table, and the address list is placed so that a table number associated with the address stored in the variable does not change even if each address changes due to switching. In this way, the embodiment of the present invention can support a worker to easily modify a system program in correspondence with an online system update without requiring a lot of effort.

As above, the program modification support devices and the program modification support methods according to the embodiments of the present invention have been described. The present invention is not limited to the embodiments described above and can be arbitrarily change within the scope of the present invention. For example, in the embodiments described above, although the system program SP has been described as being described using the C language, the present invention is not intended to be limited to a case in which the system program SP is described using the C language. The system program SP may be described using an arbitrary language other than the C language.

In addition, in the embodiment described above, an example in which the online update controller 24 is mounted only in the process control device 20 has been described. However, as disclosed in Japanese Unexamined Patent Application Publication No. 2020-52668, the function of the online update controller 24 may be implemented with being divided into the process control device 10 and the process control device 20.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

## Claims

1. A program modification support device (40) that supports modifications of programs realizing functions of a process control system (1) comprising a first process control device (10) and a second process control device (20), the first process control device (10) relating to a currently-used device, the second process control device (20) being a device for update that is not currently operated and stand by for an update of a program, the program modification support device (40) comprising:
a selector (45a) included in a processor (45) and configured to select, from data used in a first program among the programs, data required to be maintained for continuing a first function when the first process control device (10) is switched to the second process control device (20), the first program being for realizing the first function required to be continued when the first process control device (10) is switched to the second process control device (20); and
a modifier (45b) included in the processor (45) and configured to modify the programs in correspondence with an online update such that the second process control device (20) takes over the data selected by the selector (45a) from the first process control device (10),
**characterized in that**
the selector (45a) is further configured to select, from the data used in the first program, data of which a storage area of the data is to be retained up to a time point at which the switching is performed and of which values have a possibility of being changed in accordance with execution of the first program.

2. The program modification support device (40) according to claim 1,
wherein the selector (45a) is configured to determine whether or not there is a possibility of the values of the selected data being changed in accordance with execution of a second program for realizing a second function that is not required to be continued when the switching is performed.

3. The program modification support device (40) according to claim 2,
wherein, in a case in which the selector (45a) has determined that there is a possibility of the values being changed in accordance with the execution of the second program, the selector (45a) is configured to select data required to be maintained for continuing the first function when the switching is performed from the data used in the first program and the data used in the second program in which there is a possibility of the values being changed.

4. The program modification support device (40) according to claim 1,
wherein, in a case in which the data selected by the selector (45a) is data stored in an address variable area of which an address has a possibility of being changed between before/after the switching, the modifier is configured to modify the programs such that the data selected by the selector (45a) is stored in an address fixed area of which an address does not change between before/after the switching and becomes data indicated using a pointer.

5. The program modification support device (40) according to claim 4,
wherein the modifier is configured to perform a modification for changing a variable name of data stored in the address variable area, among variable names written in the first program, to a variable name of the pointer.

6. The program modification support device (40) according to claim 4,
wherein the modifier is configured to modify the programs such that a macro converting a variable name of data stored in the address variable area, among variable names written in the first program, to a variable name of the pointer is included.

7. The program modification support device (40) according to claim 6,
wherein the modifier is configured to modify the programs such that data that is stored in the address fixed area and has a possibility of causing performance degradation of the process control system (1) when instructed using the pointer, among the data selected by the selector (45a), is taken over through a take-over area secured in advance from the first process control device (10) to the second process control device (20).

8. The program modification support device (40) according to claim 7,
wherein the modifier is configured to perform a modification of deleting a macro relating to a variable name of data taken over from the first process control device (10) to the second process control device (20) through the take-over area, among macros included in the first program.

9. The program modification support device (40) according to any one of claims 4 to 8,
wherein, in a case in which the data selected by the selector (45a) is not able to be moved to the address fixed area, the modifier is configured to modify the programs to perform a procedure of generating an address table in which an address of the data is registered at a time of start of the first program, taking over a table number of the address table generated before the switching, and using the table number as a table number of the address table generated after the switching.

10. A program modification support method that supports modifications of programs realizing functions of a process control system (1) comprising a first process control device (10) and a second process control device (20), the first process control device (10) relating to a currently-used device, the second process control device (20) being a device for update that is not currently operated and stand by for an update of a program, the program modification support method comprising:
selecting, by a selector (45a) included in a processor (45), from data used in a first program among the programs, data required to be maintained for continuing a first function when the first process control device (10) is switched to the second process control device (20), the first program being for realizing the first function required to be continued when the first process control device (10) is switched to the second process control device (20);
modifying, by a modifier (45b) included in the processor (45) and, the programs in correspondence with an online update such that the second process control device (20) takes over the data selected by the selector (45a) from the first process control device (10); and
**characterized by**
selecting, by the selector (45a), from the data used in the first program, data of which a storage area of the data is to be retained up to a time point at which the switching is performed and of which values have a possibility of being changed in accordance with execution of the first program.

11. The program modification support method according to claim 10, further comprising:
determining, by the selector (45a), whether or not there is a possibility of the values of the selected data being changed in accordance with execution of a second program for realizing a second function that is not required to be continued when the switching is performed.

12. The program modification support method according to claim 11, further comprising:
in a case in which the selector (45a) has determined that there is a possibility of the values being changed in accordance with the execution of the second program, selecting, by the selector (45a), data required to be maintained for continuing the first function when the switching is performed from the data used in the first program and the data used in the second program in which there is a possibility of the values being changed.

## Patentansprüche

1. Programmmodifizierungsunterstützungsvorrichtung (40), die Modifizierungen von Programmen unterstützt, die Funktionen eines Prozesssteuerungssystems (1) realisieren, das eine erste Prozesssteuerungsvorrichtung (10) und eine zweite Prozesssteuerungsvorrichtung (20) umfasst, wobei sich die erste Prozesssteuerungsvorrichtung (10) auf eine gegenwärtig verwendete Vorrichtung bezieht, wobei die zweite Prozesssteuerungsvorrichtung (20) eine Vorrichtung zur Aktualisierung ist, die gegenwärtig nicht betrieben wird und für eine Aktualisierung eines Programms bereitsteht, wobei die Programmmodifizierungsunterstützungsvorrichtung (40) umfasst:
einen Selektor (45a), der in einem Prozessor (45) eingeschlossen und so konfiguriert ist, dass er aus Daten, die in einem ersten Programm unter den Programmen verwendet werden, Daten auswählt, die für die Fortsetzung einer ersten Funktion beibehalten werden müssen, wenn die erste Prozesssteuerungsvorrichtung (10) auf die zweite Prozesssteuerungsvorrichtung (20) umgeschaltet wird, wobei das erste Programm zur Realisierung der ersten Funktion dient, die fortgesetzt werden muss, wenn die erste Prozesssteuerungsvorrichtung (10) auf die zweite Prozesssteuerungsvorrichtung (20) umgeschaltet wird; und
einen Modifizierer (45b), der in den Prozessor (45) eingeschlossen und so konfiguriert ist, dass er die Programme in Übereinstimmung mit einer Online-Aktualisierung modifiziert, sodass die zweite Prozesssteuerungsvorrichtung (20) die von dem Selektor (45a) ausgewählten Daten von der ersten Prozesssteuerungsvorrichtung (10) übernimmt,
**dadurch gekennzeichnet, dass**
der Selektor (45a) weiter so konfiguriert ist, dass er aus den in dem ersten Programm verwendeten Daten Daten auswählt, von denen ein Speicherbereich der Daten bis zu einem Zeitpunkt, an dem die Umschaltung durchgeführt wird, erhalten bleiben soll und von denen Werte eine Möglichkeit haben, in Übereinstimmung mit einer Ausführung des ersten Programms verändert zu werden.

2. Programmmodifizierungsunterstützungsvorrichtung (40) nach Anspruch 1,
wobei der Selektor (45a) so konfiguriert ist, dass er bestimmt, ob die Möglichkeit besteht oder nicht, dass die Werte der ausgewählten Daten in Übereinstimmung mit einer Ausführung eines zweiten Programms zur Realisierung einer zweiten Funktion, die nicht fortgesetzt werden muss, wenn die Umschaltung durchgeführt wird, geändert werden.

3. Programmmodifizierungsunterstützungsvorrichtung (40) nach Anspruch 2,
wobei in einem Fall, in dem der Selektor (45a) bestimmt hat, dass die Möglichkeit besteht, dass die Werte in Übereinstimmung mit der Ausführung des zweiten Programms geändert werden, der Selektor (45a) so konfiguriert ist, dass er aus den in dem ersten Programm verwendeten Daten und den in dem zweiten Programm verwendeten Daten, bei denen die Möglichkeit besteht, dass die Werte geändert werden, Daten auswählt, die für die Fortsetzung der ersten Funktion beibehalten werden müssen, wenn die Umschaltung durchgeführt wird.

4. Programmmodifizierungsunterstützungsvorrichtung (40) nach Anspruch 1,
wobei in einem Fall, in dem die durch den Selektor (45a) ausgewählten Daten Daten sind, die in einem adressvariablen Bereich gespeichert sind, von dem eine Adresse eine Möglichkeit hat, zwischen vor/nach dem Umschalten geändert zu werden, der Modifizierer so konfiguriert ist, dass er die Programme modifiziert, sodass die durch den Selektor (45a) ausgewählten Daten in einem adressfesten Bereich gespeichert sind, von dem eine Adresse sich nicht zwischen vor/nach dem Umschalten ändert, und Daten werden, die unter Verwendung eines Zeigers angezeigt werden.

5. Programmmodifizierungsunterstützungsvorrichtung (40) nach Anspruch 4,
wobei der Modifizierer so konfiguriert ist, dass er eine Modifizierung zum Ändern eines Variablennamens von Daten, die in dem adressvariablen Bereich gespeichert sind, unter in dem ersten Programm geschriebenen Variablennamen, in einen Variablennamen des Zeigers durchführt.

6. Programmmodifizierungsunterstützungsvorrichtung (40) nach Anspruch 4,
wobei der Modifizierer so konfiguriert ist, dass er die Programme modifiziert, sodass ein Makro eingeschlossen ist, das einen Variablennamen von Daten, die in dem adressvariablen Bereich gespeichert sind, unter in dem ersten Programm geschriebenen Variablennamen, in einen Variablennamen des Zeigers umwandelt.

7. Programmmodifizierungsunterstützungsvorrichtung (40) nach Anspruch 6,
wobei der Modifizierer so konfiguriert ist, dass er die Programme modifiziert, sodass Daten, die in dem adressfesten Bereich gespeichert sind und eine Möglichkeit haben, eine Leistungsverschlechterung des Prozesssteuerungssystems (1) zu verursachen, wenn sie unter Verwendung des Zeigers angewiesen werden, unter den Daten, die durch den Selektor (45a) ausgewählt werden, durch einen Übernahmebereich, der im Voraus gesichert ist, von der ersten Prozesssteuerungsvorrichtung (10) zu der zweiten Prozesssteuerungsvorrichtung (20) übernommen werden.

8. Programmmodifizierungsunterstützungsvorrichtung (40) nach Anspruch 7,
wobei der Modifizierer so konfiguriert ist, dass er eine Modifizierung des Löschens eines Makros, das sich auf einen Variablennamen von Daten bezieht, die von der ersten Prozesssteuerungsvorrichtung (10) durch den Übernahmebereich in die zweite Prozesssteuerungsvorrichtung (20) übernommen wurden, unter in dem ersten Programm eingeschlossenen Makros durchführt.

9. Programmmodifizierungsunterstützungsvorrichtung (40) nach einem der Ansprüche 4 bis 8,
wobei in einem Fall, in dem die durch den Selektor (45a) ausgewählten Daten nicht in den adressenfesten Bereich verschoben werden können, der Modifizierer so konfiguriert ist, dass er die Programme modifiziert, um eine Prozedur des Erzeugens einer Adresstabelle durchzuführen, in der eine Adresse der Daten zum Zeitpunkt des Starts des ersten Programms registriert ist, wobei er eine Tabellennummer der vor dem Umschalten erzeugten Adresstabelle übernimmt und die Tabellennummer als eine Tabellennummer der nach dem Umschalten erzeugten Adresstabelle verwendet.

10. Programmmodifizierungsunterstützungsverfahren, das Modifizierungen von Programmen unterstützt, die Funktionen eines Prozesssteuerungssystems (1) realisieren, das eine erste Prozesssteuerungsvorrichtung (10) und eine zweite Prozesssteuerungsvorrichtung (20) umfasst, wobei sich die erste Prozesssteuerungsvorrichtung (10) auf eine gegenwärtig verwendete Vorrichtung bezieht, wobei die zweite Prozesssteuerungsvorrichtung (20) eine Vorrichtung zur Aktualisierung ist, die gegenwärtig nicht betrieben wird und für eine Aktualisierung eines Programms bereitsteht, wobei das Programmmodifizierungsunterstützungsverfahren umfasst:
Auswählen, durch einen Selektor (45a), der in einem Prozessor (45) eingeschlossen ist, aus Daten, die in einem ersten Programm unter den Programmen verwendet werden, von Daten, die für die Fortsetzung einer ersten Funktion beibehalten werden müssen, wenn die erste Prozesssteuerungsvorrichtung (10) zu der zweiten Prozesssteuerungsvorrichtung (20) umgeschaltet wird, wobei das erste Programm dazu dient, die erste Funktion zu realisieren, die fortgesetzt werden muss, wenn die erste Prozesssteuerungsvorrichtung (10) zu der zweiten Prozesssteuerungsvorrichtung (20) umgeschaltet wird;
Modifizieren der Programme durch einen in dem Prozessor (45) eingeschlossenen Modifizierer (45b) in Übereinstimmung mit einer Online-Aktualisierung, sodass die zweite Prozesssteuerungsvorrichtung (20) die durch den Selektor (45a) ausgewählten Daten von der ersten Prozesssteuerungsvorrichtung (10) übernimmt; und
**gekennzeichnet durch**
Auswählen, durch den Selektor (45a), aus den in dem ersten Programm verwendeten Daten, von Daten, von denen ein Speicherbereich der Daten bis zu einem Zeitpunkt erhalten bleiben soll, zu dem die Umschaltung durchgeführt wird, und von denen Werte eine Möglichkeit haben, in Übereinstimmung mit einer Ausführung des ersten Programms geändert zu werden.

11. Programmmodifizierungsunterstützungsverfahren nach Anspruch 10, weiter umfassend:
Bestimmen, durch den Selektor (45a), ob die Möglichkeit besteht oder nicht, dass die Werte der ausgewählten Daten in Übereinstimmung mit einer Ausführung eines zweiten Programms zur Realisierung einer zweiten Funktion, die nicht fortgesetzt werden muss, wenn die Umschaltung durchgeführt wird, geändert werden.

12. Programmmodifizierungsunterstützungsverfahren nach Anspruch 11, weiter umfassend:
in einem Fall, in dem der Selektor (45a) bestimmt hat, dass die Möglichkeit besteht, dass die Werte in Übereinstimmung mit der Ausführung des zweiten Programms geändert werden, Auswählen, durch den Selektor (45a), von Daten, die für die Fortsetzung der ersten Funktion beibehalten werden müssen, wenn die Umschaltung durchgeführt wird, aus den in dem ersten Programm verwendeten Daten und den in dem zweiten Programm verwendeten Daten, bei denen die Möglichkeit besteht, dass die Werte geändert werden.

## Revendications

1. Dispositif de support de modification de programmes (40) qui supporte des modifications de programmes réalisant des fonctions d'un système de commande de processus (1) comprenant un premier dispositif de commande de processus (10) et un second dispositif de commande de processus (20), le premier dispositif de commande de processus (10) se rapportant à un dispositif actuellement utilisé, le second dispositif de commande de processus (20) étant un dispositif de mise à jour qui n'est pas actuellement utilisé et qui est en attente d'une mise à jour d'un programme, le dispositif de support de modification de programme (40) comprenant :
un sélecteur (45a) inclus dans un processeur (45) et configuré pour sélectionner, parmi des données utilisées dans un premier programme parmi les programmes, des données devant être conservées pour poursuivre une première fonction lorsque le premier dispositif de commande de processus (10) est commuté sur le second dispositif de commande de processus (20), le premier programme étant destiné à réaliser la première fonction devant être poursuivie lorsque le premier dispositif de commande de processus (10) est commuté sur le second dispositif de commande de processus (20) ; et
un modificateur (45b) inclus dans le processeur (45) et configuré pour modifier les programmes en correspondance avec une mise à jour en ligne de telle sorte que le second dispositif de commande de processus (20) récupère les données sélectionnées par le sélecteur (45a) à partir du premier dispositif de commande de processus (10),
**caractérisé en ce que**
le sélecteur (45a) est en outre configuré pour sélectionner, parmi les données utilisées dans le premier programme, des données dont une zone de stockage des données doit être conservée jusqu'à un instant auquel la commutation est effectuée et dont les valeurs ont la possibilité d'être modifiées en fonction de l'exécution du premier programme.

2. Dispositif de support de modification de programmes (40) selon la revendication 1,
dans lequel le sélecteur (45a) est configuré pour déterminer s'il existe ou non une possibilité que les valeurs des données sélectionnées soient modifiées conformément à l'exécution d'un second programme pour réaliser une seconde fonction qui n'a pas besoin d'être poursuivie lorsque la commutation est effectuée.

3. Dispositif de support de modification de programmes (40) selon la revendication 2,
dans lequel, dans le cas où le sélecteur (45a) a déterminé qu'il existe une possibilité que les valeurs soient modifiées conformément à l'exécution du second programme, le sélecteur (45a) est configuré pour sélectionner des données devant être conservées pour poursuivre la première fonction lorsque la commutation est effectuée parmi les données utilisées dans le premier programme et les données utilisées dans le second programme pour lesquelles il existe une possibilité que les valeurs soient modifiées.

4. Dispositif de support de modification de programmes (40) selon la revendication 1,
dans lequel, dans le cas où les données sélectionnées par le sélecteur (45a) sont des données stockées dans une zone de variable d'adresse dont une adresse présente la possibilité d'être modifiée avant/après la commutation, le modificateur est configuré pour modifier les programmes de telle sorte que les données sélectionnées par le sélecteur (45a) sont stockées dans une zone d'adresse fixe dont une adresse ne change pas entre avant/après la commutation et deviennent des données indiquées à l'aide d'un pointeur.

5. Dispositif de support de modification de programmes (40) selon la revendication 4,
dans lequel le modificateur est configuré pour effectuer une modification pour modifier un nom de variable de données stockées dans la zone de variable d'adresse, parmi des noms de variables écrits dans le premier programme, en un nom de variable du pointeur.

6. Dispositif de support de modification de programmes (40) selon la revendication 4,
dans lequel le modificateur est configuré pour modifier les programmes de sorte qu'une macro convertissant un nom de variable de données stockées dans la zone de variable d'adresse, parmi les noms de variable écrits dans le premier programme, en un nom de variable du pointeur soit incluse.

7. Dispositif de support de modification de programmes (40) selon la revendication 6,
dans lequel le modificateur est configuré pour modifier les programmes de sorte que les données qui sont stockées dans la zone d'adresse fixe et qui présentent une possibilité de provoquer une dégradation des performances du système de commande de processus (1) lorsqu'elles sont commandées à l'aide du pointeur, parmi les données sélectionnées par le sélecteur (45a), sont transférées via une zone de transfert sécurisée à l'avance du premier dispositif de commande de processus (10) au second dispositif de commande de processus (20).

8. Dispositif de support de modification de programmes (40) selon la revendication 7,
dans lequel le modificateur est configuré pour effectuer une modification consistant à supprimer une macro relative à un nom de variable de données transférées du premier dispositif de commande de processus (10) au second dispositif de commande de processus (20) via la zone de transfert, parmi les macros incluses dans le premier programme.

9. Dispositif de support de modification de programmes (40) selon l'une quelconque des revendications 4 à 8,
dans lequel, dans le cas où les données sélectionnées par le sélecteur (45a) ne peuvent pas être déplacées vers la zone d'adresse fixe, le modificateur est configuré pour modifier les programmes afin d'exécuter une procédure consistant à générer une table d'adresses dans laquelle une adresse des données est enregistrée au moment du démarrage du premier programme, récupérer un numéro de table de la table d'adresses générée avant la commutation, et utiliser le numéro de table comme numéro de table de la table d'adresses générée après la commutation.

10. Programme de support de modification de programmes qui supporte des modifications de programmes réalisant des fonctions d'un système de commande de processus (1) comprenant un premier dispositif de commande de processus (10) et un second dispositif de commande de processus (20), le premier dispositif de commande de processus (10) se rapportant à un dispositif actuellement utilisé, le second dispositif de commande de processus (20) étant un dispositif de mise à jour qui n'est pas actuellement utilisé et est en attente d'une mise à jour d'un programme, le procédé de support de modification de programmes comprenant :
la sélection, par un sélecteur (45a) inclus dans un processeur (45), parmi des données utilisées dans un premier programme parmi les programmes, de données devant être conservées pour poursuivre une première fonction lorsque le premier dispositif de commande de processus (10) est commuté sur le second dispositif de commande de processus (20), le premier programme étant destiné à réaliser la première fonction devant être poursuivie lorsque le premier dispositif de commande de processus (10) est commuté sur le second dispositif de commande de processus (20) ;
la modification, par un modificateur (45b) inclus dans le processeur (45) des programmes en correspondance avec une mise à jour en ligne de sorte que le second dispositif de commande de processus (20) récupère les données sélectionnées par le sélecteur (45a) à partir du premier dispositif de commande de processus (10) ; et
**caractérisé par**
la sélection, par le sélecteur (45a), parmi les données utilisées dans le premier programme, de données dont une zone de stockage des données doit être conservée jusqu'au moment où la commutation est effectuée et dont les valeurs présentent la possibilité d'être modifiées en fonction de l'exécution du premier programme.

11. Procédé de support de modification de programmes selon la revendication 10, comprenant en outre :
la détermination, par le sélecteur (45a), du fait de savoir s'il existe ou non une possibilité que les valeurs des données sélectionnées soient modifiées conformément à l'exécution d'un second programme pour la réalisation d'une seconde fonction dont la poursuite n'est pas requise lors de l'exécution de la commutation.

12. Procédé de support de modification de programmes selon la revendication 11, comprenant en outre :
dans le cas où le sélecteur (45a) a déterminé qu'il y a une possibilité que les valeurs soient modifiées conformément à de l'exécution du second programme, la sélection, par le sélecteur (45a), de données devant être conservées pour poursuivre la première fonction lorsque la commutation est effectuée, parmi les données utilisées dans le premier programme et les données utilisées dans le second programme pour lesquelles il existe une possibilité que les valeurs soient modifiées.
